# EUROPEAN PATENT APPLICATION

(11) **EP 4 607 919 A1**
(43) Date of publication of application: **27.08.2025**
(21) Application number: 23879599.1
(22) Date of filing: 03.10.2023
(51) Int. Cl.: H04N 19/11, H04N 19/146, H04N 19/176, H04N 19/20, H04N 19/463

(54) **INFORMATION PROCESSING DEVICE AND METHOD**

(30) Priority: 19.10.2022 JP 2022167296
(71) Applicant: Sony Group Corporation, Tokyo 108-0075 (JP)
(72) Inventor: HAYASHI Kao, Tokyo 108-0075 (JP); KUMA Satoru, Tokyo 108-0075 (JP); KATO Tsuyoshi, Tokyo 108-0075 (JP)
(74) Representative: D Young & Co LLP
(86) International application number: PCT/JP2023/036015
(87) International publication number: WO 2024/084952

(57) **Abstract**

The present disclosure relates to an information processing device and method to make it possible to reduce a decrease in coding efficiency.

A first system or a second system is selected as a coding system of a base mesh to be intra-coded, and when the first system is selected as the coding system, vertex information and connection information of the base mesh are coded by being converted into secondary information indicating the relationship between adjacent faces of the base mesh, and when the second system is selected as the coding system, the vertex information and the connection information are coded without being converted into the secondary information. The present disclosure may be applied to, for example, an information processing device, an electronic device, an information processing method, a program, or the like.

## Description

### TECHNICAL FIELD

The present disclosure relates to an information processing device and method, and more particularly relates to an information processing device and method capable of reducing a decrease in coding efficiency.

### BACKGROUND ART

Conventionally, as a coding method of a mesh that is 3D data representing a three-dimensional structure of an object by connection with vertices, there has been video-based dynamic mesh coding (V-DMC) (see, for example, Non-Patent Document 1). In the V-DMC, a mesh to be coded is represented by a coarse base mesh and a displacement vector of a division point obtained by subdividing the base mesh, and the base mesh and the displacement vector are coded. The displacement vector is stored (packed) in a two-dimensional image, and is coded as a moving image (displacement video) using the two-dimensional image as a frame.

As a coding method of a base mesh, there are intra coding in which coding is performed independently for each frame and inter coding in which coding is performed using a correlation between frames. As the intra coding, for example, a coding system that refers to adjacent faces such as Draco has been proposed. In such a coding system, the vertex information indicating the positions of the vertices constituting the base mesh and the connection information indicating the connection between the vertices constituting the base mesh are converted into "secondary information indicating the relationship between the adjacent faces" and coded.

Meanwhile, in recent years, a method has been proposed in which one frame is divided into a plurality of sub-meshes (patches) and coded independently of each other (see, for example, Non-Patent Document 2 and Non-Patent Document 3). By dividing into the sub-meshes, a coding method more suitable for the feature of the shape of the mesh can be selected.

### CITATION LIST

### NON-PATENT DOCUMENT

Non-Patent Document 1: Khaled Mammou, Jungsun Kim, Alexis Tourapis, Dimitri Podborski, Krasimir Kolarov, "[V-CG] Apple's Dynamic Mesh Coding CfP Response", ISO/IEC JTC 1/SC 29/WG 7 m59281, April 2022
Non-Patent Document 2: Alexis Tourapis, Jungsun Kim, Dimitri Podborski, Khaled Mammou, "Base mesh data substream format for VDMC", ISO/IEC JTC 1/SC 29/WG 7 m60362, July 2022
Non-Patent Document 3: Jungsun Kim, Alexis Tourapis, Dimitri Podborski, Khaled Mammou, David, "VDMC support in the V3C framework", ISO/IEC JTC 1/SC 29/WG 7 m60363, July 2022

### SUMMARY OF THE INVENTION

### PROBLEMS TO BE SOLVED BY THE INVENTION

However, when the sub-mesh is divided, the number of faces of one coding unit (data unit that can be coded independently of the others) is reduced. In the coding system of referring to adjacent faces as described above, when the number of faces in the coding unit is reduced, the use effect of the reference result of the adjacent faces is reduced, and the coding efficiency may be reduced.

The present disclosure has been made in view of such a situation, and an object thereof is to make it possible to reduce a decrease in coding efficiency.

### SOLUTIONS TO PROBLEMS

An information processing device according to one aspect of the present technology includes: a coding system determination unit that selects a first system or a second system as a coding system of a base mesh to be subjected to intra coding; a first coding unit that, when the first system is selected as the coding system, converts vertex information indicating positions of vertices constituting the base mesh and connection information indicating connection between the vertices constituting the base mesh into secondary information indicating a relationship between adjacent faces of the base mesh and codes the secondary information; and a second coding unit that, when the second system is selected as the coding system, codes the vertex information and the connection information without converting the vertex information and the connection information into the secondary information. The base mesh is a mesh that is generated by decimating vertices from an original mesh to be coded configured by vertices and connections representing a three-dimensional structure of an object, and is coarser than the original mesh.

An information processing method according to one aspect of the present technology is an information processing method including: selecting a first system or a second system as a coding system of a base mesh to be subjected to intra coding; converting, when the first system is selected as the coding system, vertex information indicating positions of vertices constituting the base mesh and connection information indicating connection between the vertices constituting the base mesh into secondary information indicating a relationship between adjacent faces of the base mesh and coding the secondary information; and coding, when the second system is selected as the coding system, the vertex information and the connection information without converting the vertex information and the connection information into the secondary information. The base mesh is a mesh that is generated by decimating vertices from an original mesh to be coded configured by vertices and connections representing a three-dimensional structure of an object, and is coarser than the original mesh.

An information processing device according to another aspect of the present technology includes: a first decoding unit that decodes coded data of an intra-coded base mesh, generates secondary information indicating a relationship between adjacent faces of the base mesh, and converts the generated secondary information into vertex information and connection information of the base mesh when coding system control information indicates a first system as a coding system of the intra-coded base mesh; and a second decoding unit that decodes coded data of the base mesh and generates the vertex information and the connection information that are not converted into the secondary information when the coding system control information indicates a second system as the coding system. The base mesh is a mesh that is generated by decimating vertices from an original mesh to be coded configured by vertices and connections representing a three-dimensional structure of an object, and is coarser than the original mesh. The vertex information is information indicating a position of a vertex constituting the base mesh. The connection information is information indicating connection between the vertices constituting the base mesh. The first system is a coding system of converting the vertex information and the connection information into the secondary information and coding the secondary information. The second system is a coding system of coding the vertex information and the connection information without converting the vertex information and the connection information into the secondary information.

An information processing method according to another aspect of the present technology includes: decoding coded data of an intra-coded base mesh, generating secondary information indicating a relationship between adjacent faces of the base mesh, and converting the generated secondary information into vertex information and connection information of the base mesh when coding system control information indicates a first system as a coding system of the intra-coded base mesh; and decoding coded data of the base mesh and generating the vertex information and the connection information that are not converted into the secondary information when the coding system control information indicates a second system as the coding system. The base mesh is a mesh that is generated by decimating vertices from an original mesh to be coded configured by vertices and connections representing a three-dimensional structure of an object, and is coarser than the original mesh. The vertex information is information indicating a position of a vertex constituting the base mesh. The connection information is information indicating connection between the vertices constituting the base mesh. The first system is a coding system of converting the vertex information and the connection information into the secondary information and coding the secondary information. The second system is a coding system of coding the vertex information and the connection information without converting the vertex information and the connection information into the secondary information.

In the information processing device and the method according to one aspect of the present technology, the first system or the second system is selected as the coding system of the base mesh to be intra-coded, and when the first system is selected as the coding system, the vertex information indicating the positions of the vertices constituting the base mesh and the connection information indicating the connection between the vertices constituting the base mesh are coded by being converted into the secondary information indicating the relationship between the adjacent faces of the base mesh, and when the second system is selected as the coding system, the vertex information and the connection information are coded without being converted into the secondary information.

In the information processing device and the method according to another aspect of the present technology, when the coding system control information indicates the first system as the coding system of the base mesh that has been intra-coded, the coded data of the base mesh is decoded to generate secondary information indicating the relationship between the adjacent faces in the base mesh, and the generated secondary information is converted into vertex information and connection information of the base mesh. When the coding system control information indicates the second system as the coding system, the coded data of the base mesh is decoded to generate vertex information and connection information that have not been converted into the secondary information.

### BRIEF DESCRIPTION OF DRAWINGS

Fig. 1 is a diagram for explaining a mesh.
Fig. 2 is a diagram for explaining V-DMC.
Fig. 3 is a diagram for explaining a displacement vector.
Fig. 4 is a diagram for explaining a displacement video.
Fig. 5 is a diagram for explaining an example of an intra coding system.
Fig. 6 is a diagram for explaining an example of the intra coding system.
Fig. 7 is a diagram for explaining an example of the intra coding system.
Fig. 8 is a diagram for explaining sub-meshing.
Fig. 9 is a diagram for explaining sub-meshing.
Fig. 10 is a diagram for explaining sub-meshing.
Fig. 11 is a diagram for explaining sub-meshing.
Fig. 12 is a diagram for explaining comparison of bit amounts.
Fig. 13 is a diagram illustrating a comparative example of a bit amount.
Fig. 14 is a diagram illustrating an example of a coding method.
Fig. 15 is a diagram illustrating an outline of the coding method.
Fig. 16 is a diagram illustrating an example of a raw patch.
Fig. 17 is a diagram illustrating an example of the raw patch.
Fig. 18 is a diagram illustrating an example of storing the raw patch.
Fig. 19 is a diagram illustrating a comparative example of a bit rate.
Fig. 20 is a block diagram illustrating a main configuration example of a coding device.
Fig. 21 is a block diagram illustrating a main configuration example of an intra unit.
Fig. 22 is a flowchart for explaining an example of a flow of coding processing.
Fig. 23 is a flowchart for explaining an example of a flow of intra coding processing.
Fig. 24 is a block diagram illustrating a main configuration example of a decoding device.
Fig. 25 is a block diagram illustrating an example of a main configuration of an intra decoding unit.
Fig. 26 is a flowchart for explaining an example of a flow of decoding processing.
Fig. 27 is a flowchart for explaining an example of a flow of intra decoding processing.
Fig. 28 is a block diagram illustrating a main configuration example of a computer.

### MODE FOR CARRYING OUT THE INVENTION

Modes for carrying out the present disclosure (hereinafter, referred to as embodiments) are hereinafter described. Note that the description will be made in the following order.
1. Documents and the Like Supporting Technical Content and Technical Terms
**2.** Intra coding of Base Mesh
**3.** Coding without Conversion into Secondary Information
4. Embodiment
5. Supplementary Note

### <1. Documents and the Like Supporting Technical Content and Technical Terms>

The scope disclosed in the present technology includes, in addition to the contents disclosed in the embodiments, contents described in following Non-Patent Documents and the like known at the time of filing, the contents of other documents referred to in following Non-Patent Documents and the like.

### Non-Patent Document 1: (described above)

That is, the contents described in the above-described Non Patent Documents, the contents of other documents referred to in the above-described Non Patent Documents, and the like are also basis for determining the support requirement.

### <2.Intra Coding of Base Mesh>

### <V-DMC>

Conventionally, as 3D data representing a three-dimensional structure of an erected structure (object having a three-dimensional shape), there has been known a mesh (mesh) representing a three-dimensional shape of an object surface by forming polygons by vertices and connections.

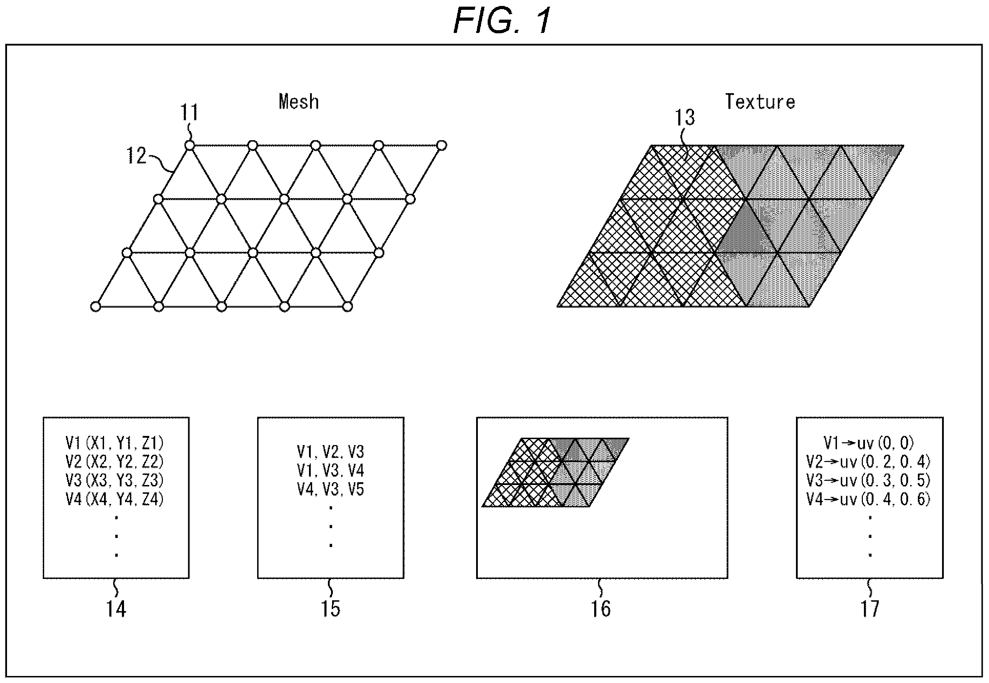

As illustrated in the upper left part of Fig. 1, in the mesh, vertices 11 and connections 12 connecting the vertices 11 form polygonal planes (polygons). The surface of the object having the three-dimensional structure, that is, the three-dimensional shape of the object is expressed by the polygon (also referred to as a face). Note that a texture 13 can be applied to each face of the mesh.

The mesh data includes, for example, information as illustrated in the lower part of Fig. 1. Vertex information 14 illustrated first from the left in the lower part of Fig. 1 is information indicating a three-dimensional position (three-dimensional coordinates (X, Y, Z)) of each vertex 11 constituting the mesh. Connection information 15 illustrated second from the left in the lower part of Fig. 1 is information indicating each connection 12 constituting the mesh. A texture image 16 illustrated third from the left in the lower part of Fig. 1 is map information of the texture 13 attached to each face. A UV map 17 illustrated fourth from the left in the lower part of Fig. 1 is information indicating a correspondence relationship between the vertex 11 and the texture 13. In the UV map 17, coordinates (UV coordinates) of each vertex 11 in the texture image 16 are shown.

As a coding method of such a mesh, for example, there is video-based dynamic mesh coding (V-DMC) as disclosed in Non-Patent Document 1.

In the V-DMC, a mesh to be coded is represented by a coarse base mesh and a displacement vector of a division point obtained by subdividing the base mesh, and the base mesh and the displacement vector are coded.

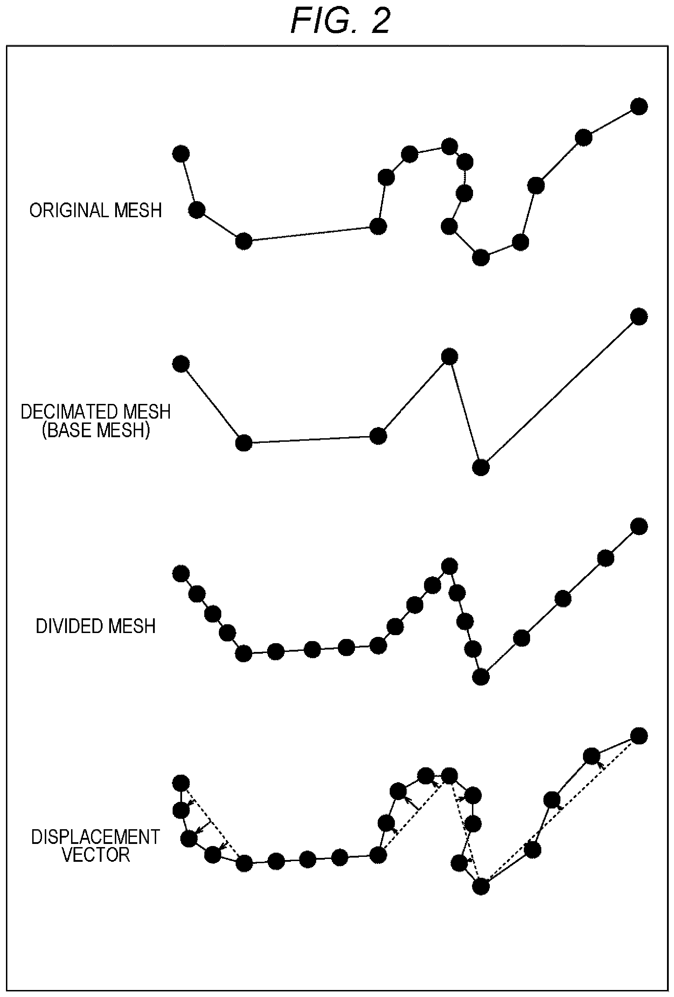

For example, it is assumed that there is an original mesh as illustrated in the uppermost part of Fig. 2. In Fig. 2, a black dot indicates a vertex, and a line connecting the black dots indicates a connection. As described above, the mesh originally forms a polygon by being connected to the vertices, but here, for convenience of description, the mesh is described as a vertex group connected linearly (in series).

By decimating some vertices of the original mesh, a coarse mesh as shown in the second row from the top in Fig. 2 is formed. This is used as a base mesh.

By subdividing each mesh of this base mesh, vertices are added as shown in the third row from the top in Fig. 2. Here, it is assumed that vertices are added by the number obtained by decimating vertices from the original mesh by this subdivision. Therefore, a mesh having the same number of vertices as the original mesh is obtained. In the present specification, this added vertex is also referred to as a division point.

However, since the connections have been updated when decimating the vertices of the original mesh and the division points are formed on this updated connection, the shape of this subdivided base mesh is different from the shape of the original mesh. More specifically, as illustrated in the lowermost part of Fig. 2, the position of the division point (on the dotted line) is different from that of the original mesh. In the present specification, a difference between the position of the division point and the position of the vertex of the original mesh is referred to as a displacement vector.

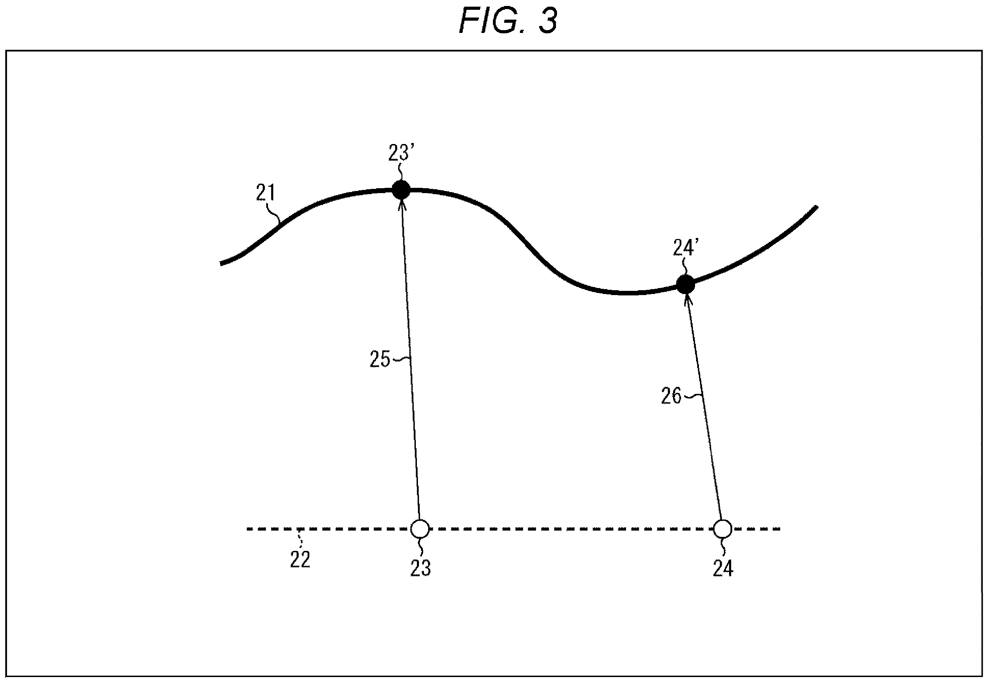

For example, it is assumed that an original mesh 21 and a subdivided base mesh 22 exist in a positional relationship as illustrated in Fig. 3. Furthermore, it is assumed that a vertex 23 and a vertex 24 of the subdivided base mesh 22 exist. In this case, as illustrated in Fig. 3, the position of the vertex 23 and the position of a vertex 23' of the original mesh 21 corresponding to the vertex 23 are different from each other. This difference is expressed as a displacement vector (displacement vector 25). Similarly, the difference between the position of the vertex 24 and the position of a vertex 24' of the original mesh 21 corresponding to the vertex 24 is expressed as a displacement vector 26. In this manner, a displacement vector is set for each vertex of the subdivided base mesh.

In the encoder, since the original mesh is known, a base mesh can be generated, and such a displacement vector can be further derived. The decoder can generate (restore) (the mesh corresponding to) the original mesh by subdividing the base mesh and applying the displacement vector to each vertex.

As described above, by reducing the number of vertices of the original mesh and coding the original mesh as the base mesh, the code amount can be reduced. Furthermore, the displacement vector is stored in a two-dimensional image and coded using 2D coding, whereby the coding efficiency can be improved. In the present specification, storing data in a two-dimensional image is also referred to as packing.

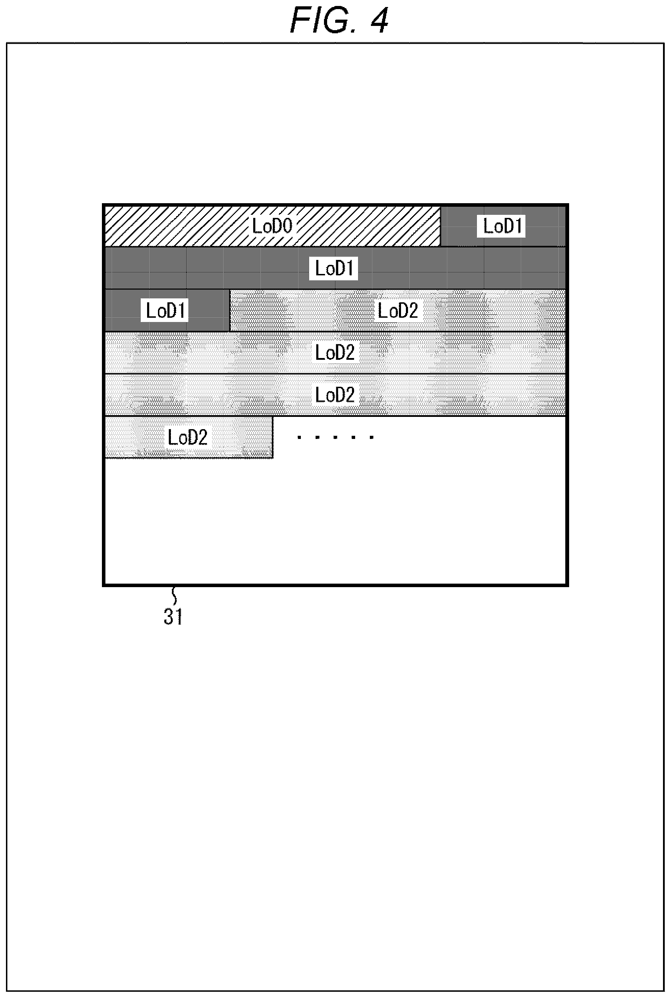

Note that the V-DMC supports scalable decoding. For example, as illustrated in Fig. 4, the displacement vectors are hierarchized for each fineness (the number of divisions of the base mesh) and packed in a two-dimensional image 31 as data for each hierarchy. In the example of Fig. 4, LoD0 packed in the two-dimensional image 31 indicates data of the displacement vector of the vertex of the uppermost layer (lowest fineness) among the displacement vectors of the vertices hierarchized for each fineness. Similarly, LoD1 indicates displacement vector data of a vertex of one upper layer of LoD0. LoD2 represents data of a displacement vector of a vertex of one upper layer of LoD1. In this manner, the displacement vectors are divided for each hierarchy (put together as data for each hierarchy) and packed.

Note that the displacement vector may be packed in a two-dimensional image as a transform coefficient by coefficient transform such as wavelet transform. Furthermore, the displacement vector may be quantized. For example, the displacement vector may be converted into a transform coefficient by wavelet transform, the transform coefficient may be quantized, and the quantized transform coefficient (quantization coefficient) may be packed.

Furthermore, the three-dimensional shape of the object may change in the time direction. In the present specification, changing in the time direction is also referred to as "dynamic". Therefore, the mesh (that is, the base mesh and the displacement vector) is also dynamic. Therefore, the displacement vector is coded as a moving image having the two-dimensional image as a frame. In the present specification, this moving image is also referred to as a displacement video.

### <Coding of Base Mesh>

As a coding method of a base mesh, there are intra coding in which coding is performed independently for each frame and inter coding in which coding is performed using a correlation between frames. As the intra coding, for example, a coding system that refers to adjacent faces such as Draco has been proposed. In such a coding system, the vertex information indicating the positions of the vertices constituting the base mesh and the connection information indicating the connection between the vertices constituting the base mesh are converted into "secondary information indicating the relationship between the adjacent faces" and coded.

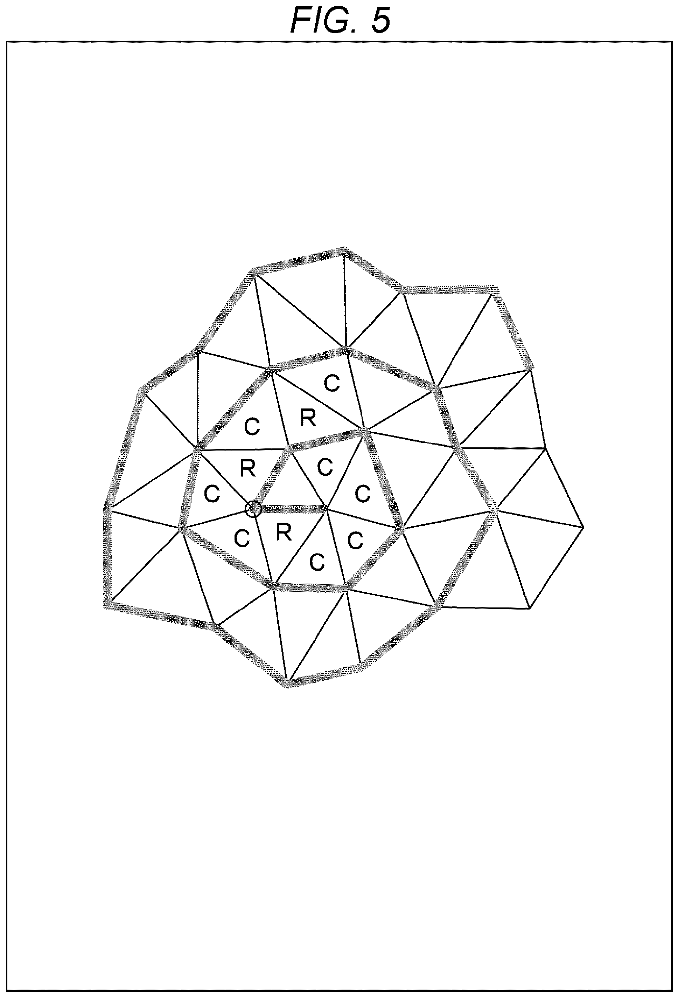

For example, in the case of Draco, the connection information is classified and symbolized for each face according to the pattern of the presence or absence of detection of adjacent faces in the search order. Then, the symbol is coded. For example, as indicated by a gray line in Fig. 5, the search order is set in a spiral shape, each face (triangle in the drawing) is detected in the search order, and is clustered (classified) and symbolized according to the presence or absence of the detection result of the adjacent face.

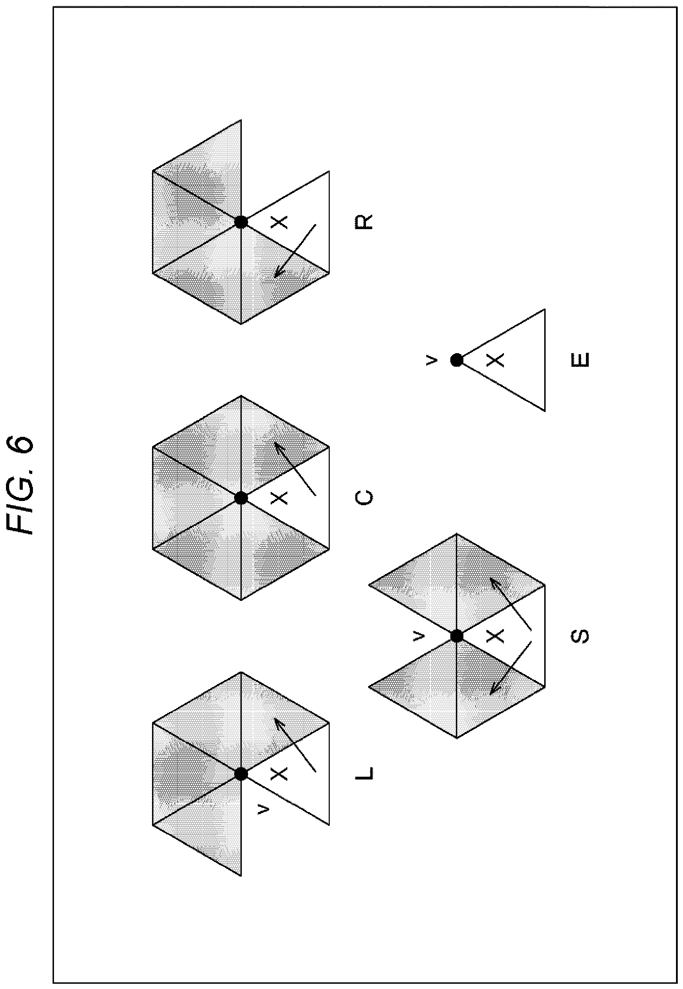

For example, as illustrated in Fig. 6, clustering is performed into five types of symbols of C, L, R, S, and E. For example, when a processing target vertex v is a non-visited vertex and there are no faces adjacent to the left and right of the processing target face, the processing target face is clustered into a symbol C. Furthermore, when the processing target vertex v is a visited vertex and the face adjacent to the left of the processing target face is a visited vertex, the processing target face is clustered into a symbol L. Furthermore, when the processing target vertex v is a visited vertex and the face adjacent to the right of the processing target face is a visited vertex, the processing target face is clustered into a symbol R. Furthermore, when the processing target vertex v is a visited vertex and the faces adjacent on the left and right of the processing target face are a non-visited vertex, the processing target face is clustered into a symbol S. Furthermore, when the processing target vertex v is a visited vertex and the faces adjacent on the left and right of the processing target face are a visited vertex, the processing target face is clustered into a symbol E. The symbol in which the face is converted in this manner is coded as the connection information.

As described above, each symbol is set according to the detection situation of the adjacent face. That is, each symbol is set according to the arrangement of the faces (the positional relationship between the processing target face and its adjacent face). In other words, the connection information is converted into "secondary information indicating the relationship between the adjacent faces" and coded.

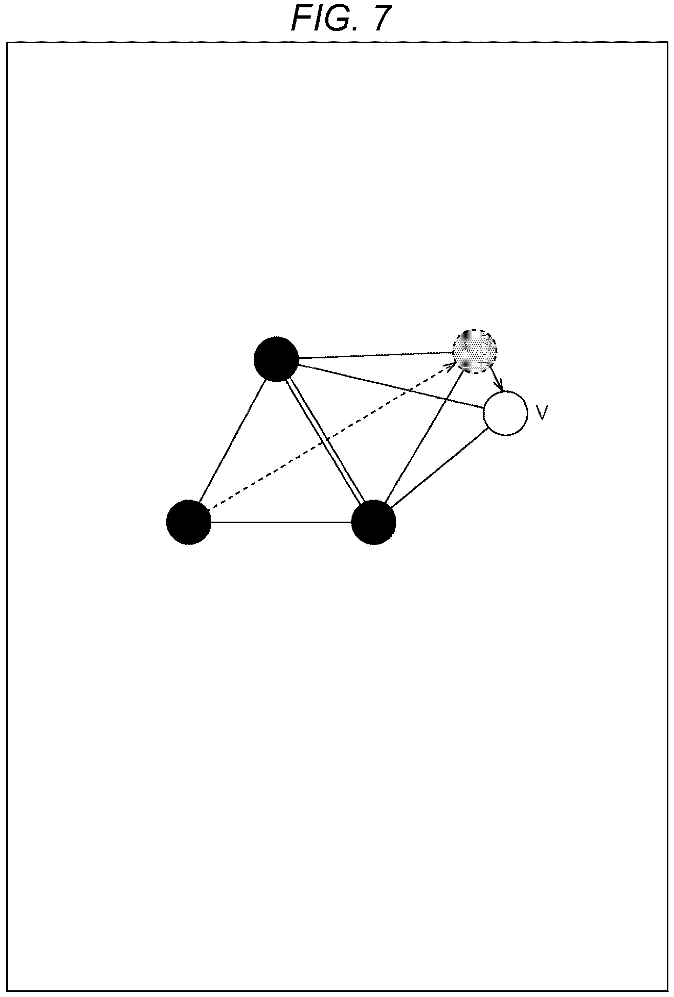

Furthermore, for the vertex information, as illustrated in Fig. 7, the vertex position is predicted by parallelogram prediction using the coded adjacent face (gray point). Then, the prediction residual is coded as vertex information of the processing target vertex v. This prediction residual depends on the position of the prediction point, i.e., the parallelogram prediction, i.e., the shape correlation between the processing target face and its neighboring face. In other words, the vertex information is converted into "secondary information indicating the relationship between the adjacent faces" and coded.

In this manner, in the coding system that refers to the adjacent face, the coding efficiency is improved by using the reference result, that is, the relationship between the adjacent faces.

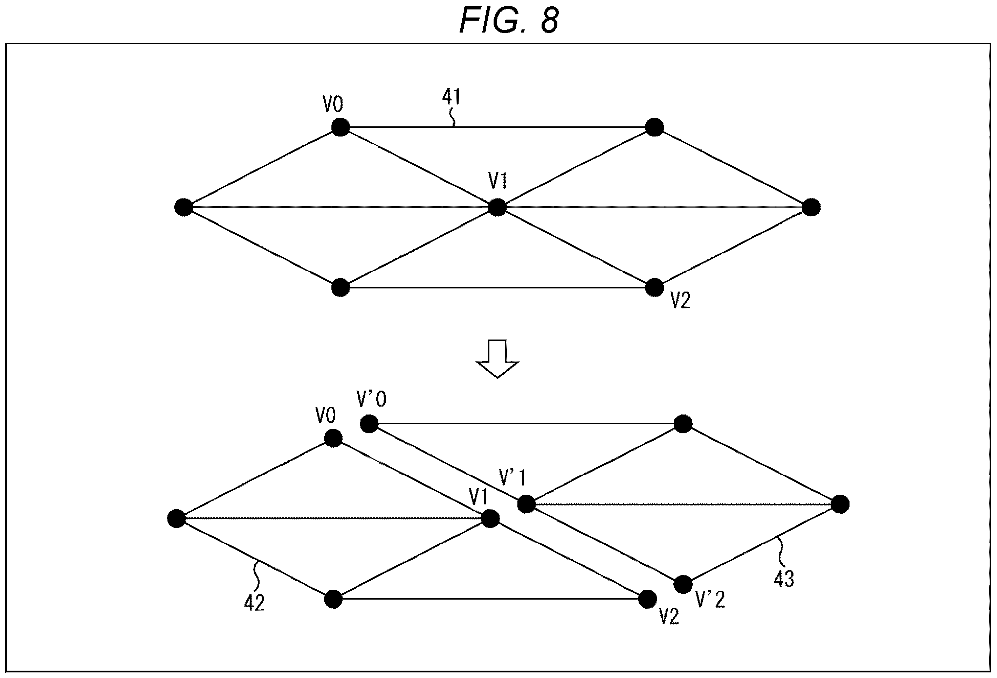

Meanwhile, in recent years, for example, as disclosed in Non-Patent Document 2 and Non-Patent Document 3, a method has been proposed in which one frame is divided into a plurality of sub-meshes (patches) and coded independently of each other. For example, as illustrated in Fig. 8, a mesh 41 is divided into a sub-mesh 42 and a sub-mesh 43, and each sub-mesh is independently coded. In this way, the coding method can be selected for each sub-mesh. Therefore, a coding method more suitable for the feature of the shape of the mesh can be selected.

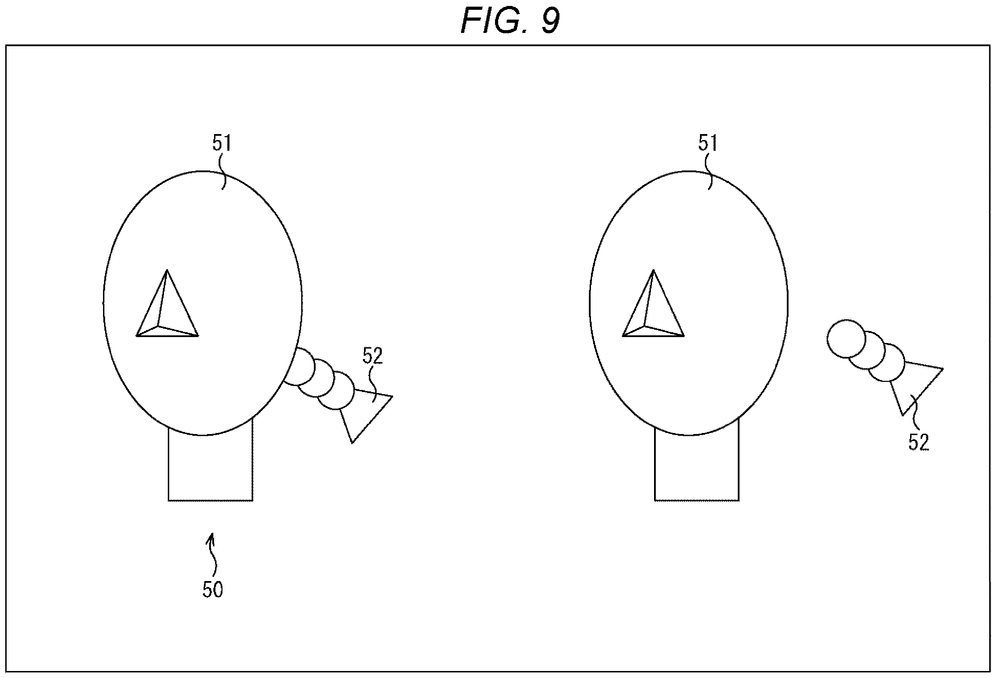

For example, it is assumed that there is a base mesh 50 representing a face portion of a person as illustrated on the left side of Fig. 9. It is assumed that the base mesh 50 includes a head portion 51 having a relatively simple three-dimensional shape and a hair portion 52 having a relatively complicated three-dimensional shape. Generally, if the correlation between frames is sufficiently high, the inter coding tends to have higher coding efficiency than the intra coding. Since the three-dimensional shape of the head portion 51 is relatively simple, the correlation between frames tends to be high, and the head portion is suitable for the inter coding. On the other hand, since the three-dimensional shape of the hair portion 52 is relatively complicated, the correlation between frames tends to be low and the hair portion is not suitable for the inter coding. Therefore, when the base mesh 50 is coded, the correlation between frames is reduced due to the influence of the hair portion 52, the intra coding is easily applied, and the coding efficiency may be reduced. Furthermore, even if the inter coding is applied, it does not last long, and the inter coding and the intra coding are switched every several frames, which may reduce the coding efficiency.

In such a case, as illustrated on the right side of Fig. 9, by sub-meshing the head portion 51 and the hair portion 52 and coding them independently, the inter coding can be stably selected for the head portion 51, and a decrease in the coding efficiency can be suppressed.

However, when the sub-mesh is divided, the number of faces of one coding unit (data unit that can be coded independently of the others) is reduced. In the coding system of referring to adjacent faces as described above, when the number of faces in the coding unit is reduced, the use effect of the reference result of the adjacent faces is reduced, and the coding efficiency may be reduced.

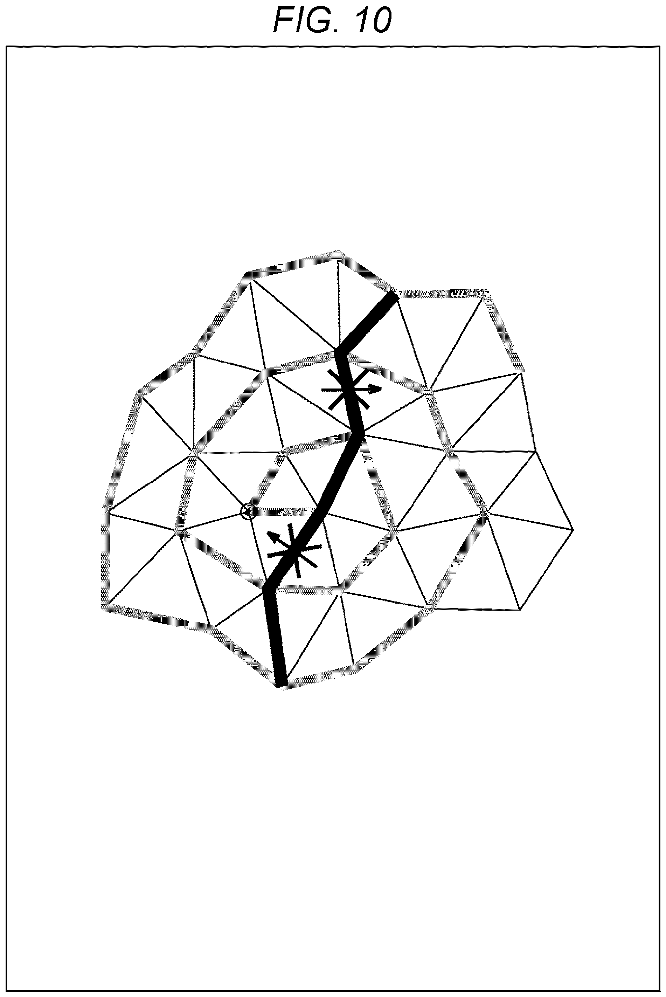

For example, when the mesh illustrated in Fig. 5 is divided into two sub-meshes as indicated by a thick line illustrated in Fig. 10, faces cannot be referred to on both sides of the thick line. Therefore, the relationship between the faces adjacent to each other in the portion cannot be used, and the coding efficiency may be reduced.

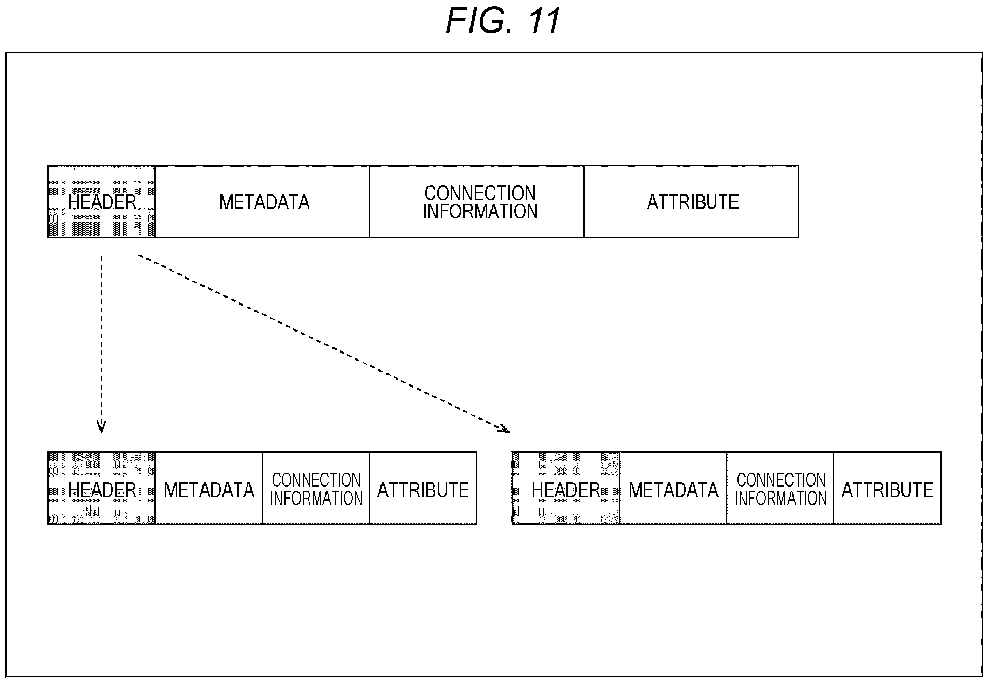

Furthermore, sub-meshing increases the number of pieces of independently coded data. That is, since the number of headers increases as illustrated in Fig. 11, there has been a possibility that information serving as an overhead increases and the coding efficiency decreases.

### <Comparison of Bit Amounts>

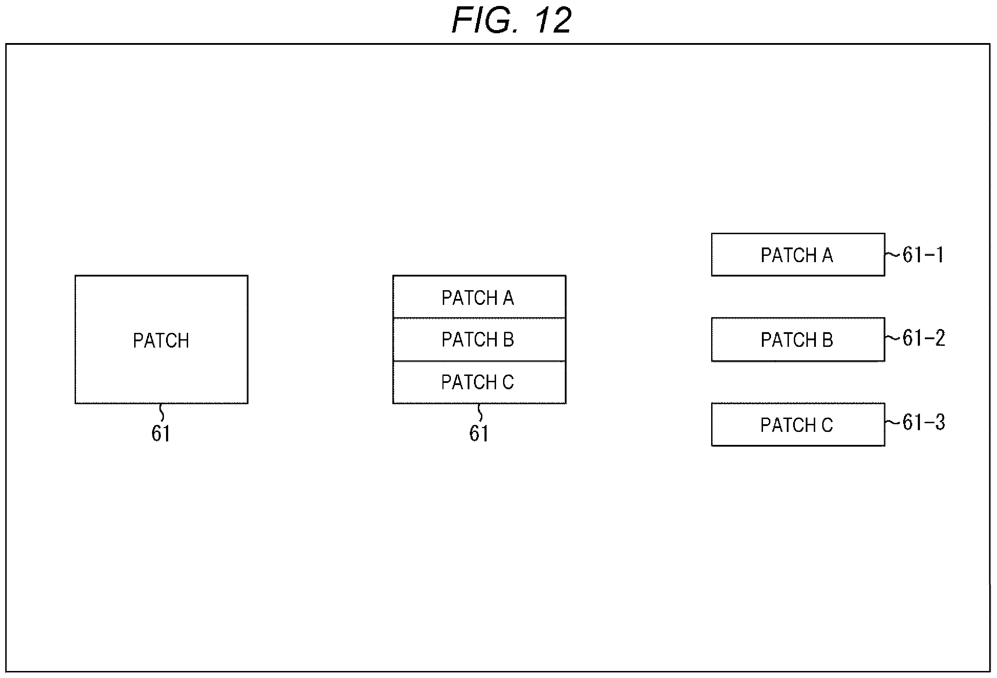

For example, the bit amounts in the case of coding using the coding system that refers to adjacent faces such as Draco are compared in three cases. In a first case, as illustrated on the left of Fig. 12, one patch 61 is coded at a time. In a second case, as illustrated in the center of Fig. 12, one patch 61 is divided into three patches A to C, and these patches are collectively (merged) coded at one time. In a third case, as illustrated on the right of Fig. 12, one patch 61 is divided into three patches A to C, and a patch 61-1 (patch A), a patch 61-2 (patch B), and a patch 61-3 (patch C) are independently coded.

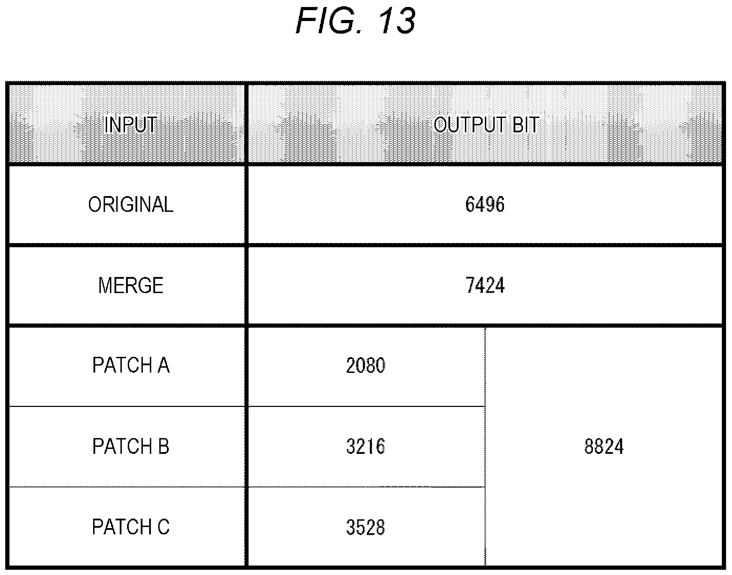

A comparison result of the output bits of each case is illustrated in Fig. 13. As shown in this table, in case 1 (original), the output bits are 6496 bits. Furthermore, in case 2 (merge), the output bits are 7424 bits. Furthermore, in case 3 (patch A, patch B, patch C), the total number of output bits is 8824. As is apparent from comparison between the output bits of case 1 and case 2, by dividing into sub-meshes, a use effect of a reference result of an adjacent face is reduced, and an output bit amount is increased. Furthermore, as is apparent from comparison between the output bits of case 2 and case 3, the number of headers is increased and the output bit amount is increased by coding each sub-mesh independently of each other. As described above, there has been a possibility that the coding efficiency is reduced by sub-meshing.

### <3. Coding without Conversion into Secondary Information>

### <Method 1>

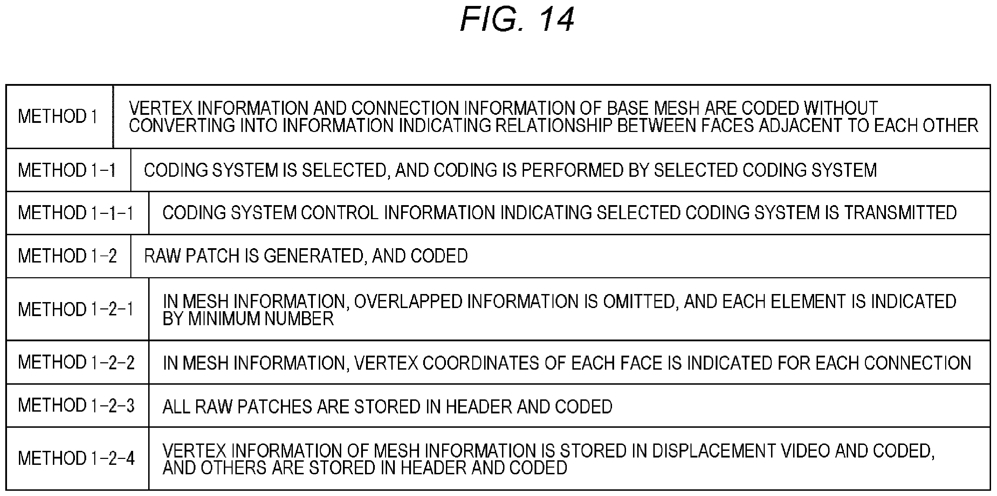

Therefore, in the case of the intra coding of the base mesh, the vertex information and the connection information of the base mesh are coded by a coding system different from the "coding system that refers to adjacent faces". For example, as illustrated in the uppermost row of the table in Fig. 14, the vertex information and the connection information of the base mesh are coded without being converted into "secondary information indicating the relationship between the adjacent faces" (Method 1).

By doing so, it is possible to suppress a decrease in coding efficiency due to a decrease in the use effect of the reference result of the adjacent face by sub-meshing. That is, even when the number of faces to be coded is reduced, a reduction in coding efficiency can be suppressed.

### <Method 1-1>

When this Method 1 is applied, for example, as illustrated in the second row from the top of the table in Fig. 14, a coding system may be selected and coding may be performed by the selected coding system (Method 1-1). That is, the coding system of the base mesh to be intra-coded may be determined (the coding system may be variable), and a coding system for coding the vertex information and the connection information of the base mesh without converting the vertex information and the connection information into "secondary information indicating the relationship between the adjacent faces" may be applied as the coding system.

For example, a coding system candidate including the coding system for coding the vertex information and the connection information of the base mesh without converting the vertex information and the connection information into "secondary information indicating the relationship between the adjacent faces" may be prepared in advance, and a coding system to be applied to the base mesh for the intra coding may be selected (determined) from the candidates. For example, a coding system (hereinafter, also referred to as a first system) for coding the vertex information and the connection information of the base mesh by converting the vertex information and the connection information into "secondary information indicating the relationship between the adjacent faces", and a coding system (hereinafter, also referred to as a second system) for coding the vertex information and the connection information of the base mesh without converting the vertex information and the connection information into the secondary information may be prepared as candidates, and any one of them may be applied to the base mesh to be intra-coded. In the present specification, "selecting a coding system" is also referred to as "determining a coding system".

For example, an information processing device (also referred to as a first information processing device) includes: a coding system determination unit that selects a first system or a second system as a coding system of a base mesh for intra coding; a first coding unit that, when the first system is selected as the coding system, codes vertex information indicating a position of a vertex constituting the base mesh and connection information indicating a connection between vertices constituting the base mesh by converting the vertex information and the connection information into secondary information indicating the relationship between the adjacent faces of the base mesh; and a second coding unit that, when the second system is selected as the coding system, codes the vertex information and the connection information without converting the vertex information and the connection information into the secondary information.

Furthermore, in the information processing method executed by the first information processing device, the first system or the second system is selected as the coding system of the base mesh to be intra-coded, and when the first system is selected as the coding system, the vertex information indicating the positions of the vertices constituting the base mesh and the connection information indicating the connection between the vertices constituting the base mesh are coded by being converted into the secondary information indicating the relationship between the adjacent faces of the base mesh, and when the second system is selected as the coding system, the vertex information and the connection information are coded without being converted into the secondary information.

For example, an information processing device (also referred to as a second information processing device) includes: a first decoding unit that decodes coded data of a base mesh, generates secondary information indicating the relationship between the adjacent faces of the base mesh, and converts the generated secondary information into vertex information and connection information of the base mesh when the coding system control information indicates a first system as a coding system of the base mesh that is intra-coded; and a second decoding unit that decodes coded data of the base mesh, and generates vertex information and connection information that are not converted into the secondary information when the coding system control information indicates a second system as the coding system.

Furthermore, in the information processing method executed by the second information processing device, when the coding system control information indicates the first system as the coding system of the base mesh that has been intra-coded, the coded data of the base mesh is decoded to generate secondary information indicating the relationship between the adjacent faces in the base mesh, and the generated secondary information is converted into vertex information and connection information of the base mesh. When the coding system control information indicates the second system as the coding system, the coded data of the base mesh is decoded to generate vertex information and connection information that have not been converted into the secondary information.

Note that the base mesh is a mesh that is generated by decimating vertices from an original mesh to be coded configured by vertices and connections representing a three-dimensional structure of an object, and is coarser than the original mesh.

Furthermore, the vertex information is information indicating positions of vertices constituting the base mesh. The connection information is information indicating connection between vertices constituting the base mesh. The first system is a coding system for coding vertex information and connection information by converting the vertex information and the connection information into the above-described secondary information. The second system is a coding system for coding vertex information and connection information without converting the vertex information and the connection information into the above-described secondary information.

It is not always possible to improve the coding efficiency by applying the second system than by applying the first system. Therefore, by making it possible to select the coding system in this manner, it is possible to suppress a reduction in coding efficiency in more various cases.

### <Coding using Correlation Between Vertices>

Note that, in this second system, the vertex information and the connection information of the base mesh may be coded and decoded in any manner as long as the vertex information and the connection information are not converted into "secondary information indicating the relationship between the adjacent faces".

For example, in the above-described first information processing device, the second coding unit may code the vertex information using the correlation between the vertices of the base mesh. For example, the second coding unit may perform differential coding on the vertex information. Furthermore, the second coding unit may perform arithmetic coding on the vertex information.

Similarly, in the above-described second information processing device, the second decoding unit may decode the coded data of the vertex information coded using the correlation between the vertices of the base mesh by a decoding method corresponding to the coding system. For example, the second decoding unit may perform differential decoding on the coded data of the differentially-coded vertex information. Furthermore, the second decoding unit may perform arithmetic decoding on the coded data of the arithmetically coded vertex information.

Furthermore, in the above-described first information processing device, the second coding unit may perform fixed bit coding on the vertex information. Similarly, in the above-described second information processing device, the second decoding unit may perform fixed bit decoding on the vertex information that has been subjected to the fixed bit coding.

### <Method 1-1-1>

When the coding system is variable as described above, it is only required to apply the same coding system to the encoder and the decoder.

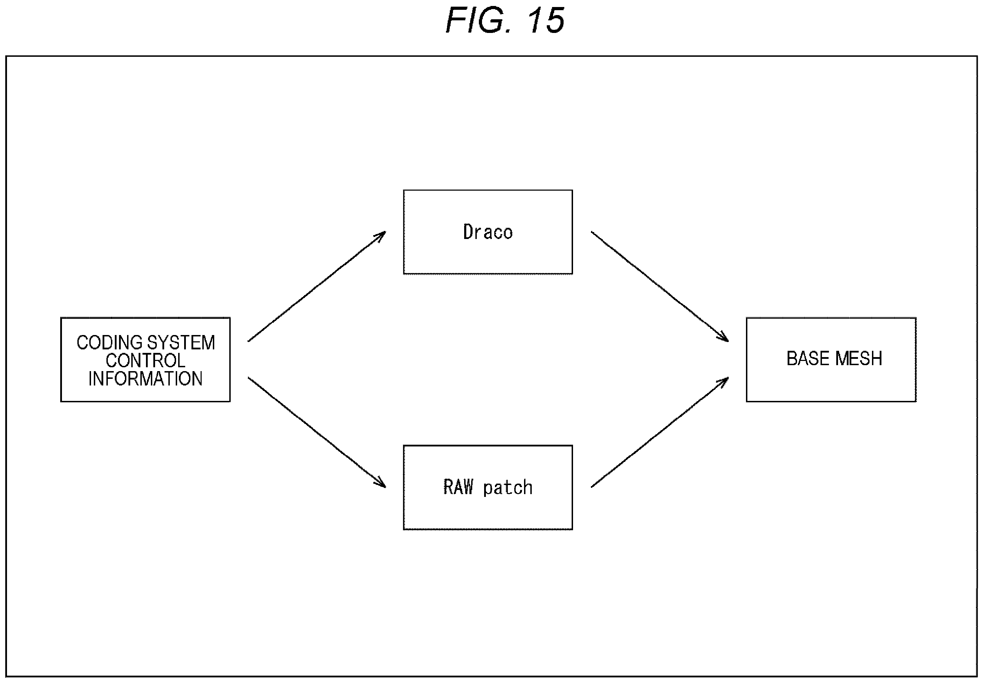

For example, as illustrated in the third row from the top of the table in Fig. 14, the coding system control information indicating the coding system selected in the encoder may be transmitted from the encoder to the decoder (Method 1-1-1). For example, in the encoder, the coding system control information indicating the applied (selected) coding system may be generated and transmitted. Furthermore, as illustrated in Fig. 15, the decoder may select whether to apply the first system or the second system for each sub-mesh (patch) according to the transmitted coding system control information, and may decode the sub-mesh. Then, the sub-meshes (patches) decoded by the respective methods may be combined to reconstruct the base mesh. The coding system control information may be stored in a header and transmitted, for example. Furthermore, the coding system control information may be coded and transmitted (as coded data).

For example, in the above-described first information processing device, the second coding unit may further store coding system control information indicating the applied (selected) coding system in the header and code the coding system control information. Furthermore, the above-described first information processing device may further include a third coding unit that stores coding system control information indicating an applied (selected) coding system in a header and codes the coding system control information.

Similarly, in the above-described second information processing device, the second decoding unit may further decode the coded data of the coding system control information stored in the header. Furthermore, the above-described second information processing device may further include a third decoding unit that decodes the coded data of the coding system control information stored in the header. Then, the first decoding unit and the second decoding unit may perform coding on the basis of the coding system control information. That is, when the first system is designated in the coding system control information, the first decoding unit may decode the coded data of the base mesh, and when the second system is designated in the coding system control information, the second decoding unit may decode the coded data of the base mesh. As described above, the first decoding unit decodes the coded data of the base mesh, generates secondary information indicating the relationship between the adjacent faces of the base mesh, and converts the secondary information into vertex information and connection information of the base mesh. Furthermore, the second decoding unit decodes the coded data of the base mesh, and generates vertex information and connection information that are not converted into the secondary information.

As described above, by transmitting the coding system control information indicating the coding system selected by the encoder from the encoder to the decoder, the decoder can more easily perform decoding by applying the same coding system as the coding system applied by the encoder at the time of coding.

### <Coding System Control Information>

The coding system control information may be any information as long as the information indicates the coding system applied in the encoder. For example, the coding system control information may include an index indicating an applied coding system. For example, when the first system is applied, an index (for example, 0) indicating the first system may be transmitted as the coding system control information, and when the second system is applied, an index (for example, 1) indicating the second system may be transmitted as the coding system control information.

Furthermore, flag information indicating whether or not the second system (or the first system) is applied may be transmitted as the coding system control information.

### <Method 1-2>

As described above, when the vertex information and the connection information of the base mesh are coded by a coding system of coding without being converted into "secondary information indicating the relationship between the adjacent faces", the base mesh may be converted into information for transmission (RAW patch). For example, as shown in the fourth row from the top of the table of Fig. 14, a raw patch may be generated from the base mesh, and the raw patch may be coded (Method 1-2). The raw patch is information for transmission of the base mesh, and is information indicating vertex information and connection information as they are although having a data format different from that of a general base mesh, and is not information indicating a relationship between adjacent faces of the base mesh.

For example, as illustrated in Fig. 15, Draco may be prepared as the first system, and a coding system for coding the raw patch may be prepared as the second system, and either of them may be applied to code and decode the base mesh.

For example, the first information processing device may further include a raw patch generation unit that converts the base mesh and generates a raw patch as the information for transmission. Then, in the first information processing device, when the second system is selected as the coding system of the base mesh for intra coding, the second coding unit may code the raw patch without converting the raw patch into secondary information indicating the relationship between the adjacent faces of the base mesh.

Furthermore, in the second information processing device, the second decoding unit may decode the coded data of the base mesh and generate a raw patch that is information of the transmission format of the base mesh. Then, the second information processing device may further include a reconstruction unit that reconstructs the base mesh using the raw patch.

### <Raw Patch>

Next, data of the raw patch will be described. The data of the raw patch includes mesh information including vertex information and connection information of the base mesh, and raw patch information including meta information related to the base mesh. The mesh information may further include UV coordinates (information indicating correspondences between vertices and textures). Furthermore, the mesh information may further include, for example, attribute information such as a normal vector. The raw patch information may include information indicating the number of raw patches. Furthermore, the raw patch information may include information indicating the number of faces in each raw patch. Furthermore, the raw patch information may include information indicating the number of vertices in each raw patch. Furthermore, the raw patch information may include information indicating the number of UV coordinates (also referred to as the number of UVs) in each raw patch. Furthermore, the raw patch information may include the number of pieces of attribute information (for example, the number of normal vectors) in each raw patch.

### <Method 1-2-1>

The data format of the raw patch (mesh information and raw patch information) may be any format. For example, as illustrated in the fifth row from the top of the table in Fig. 14, in the mesh information of the raw patch, the overlapped information may be omitted, and each element (for example, vertex information) may be indicated by a minimum number (hereinafter, also referred to as a first format) (Method 1-2-1).

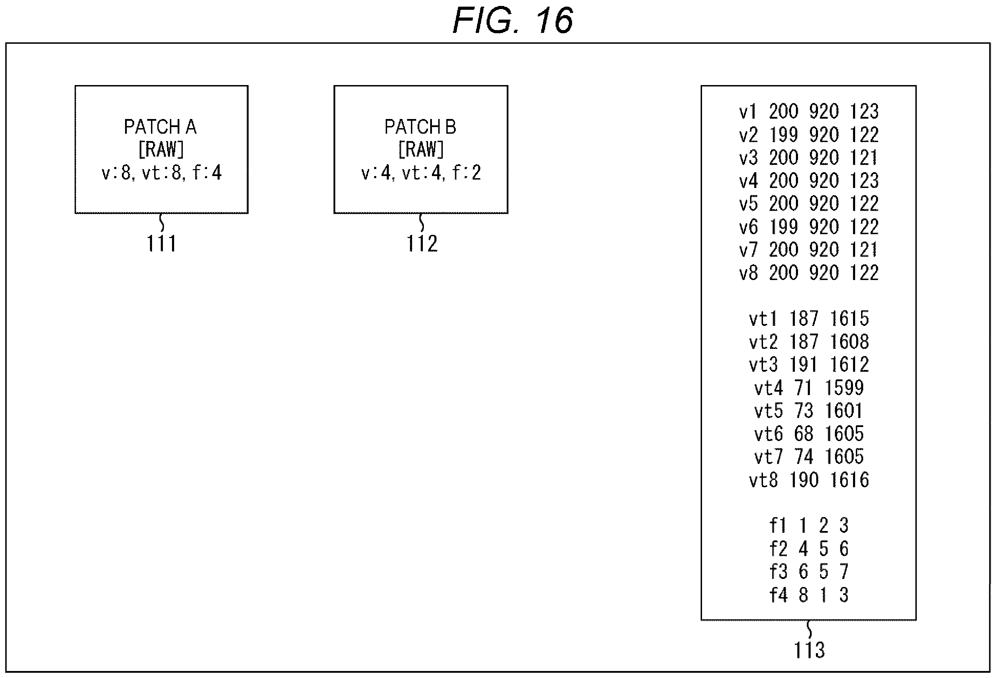

For example, it is assumed that there are two raw patches of a patch A and a patch B as illustrated in Fig. 16. The patch A has the number of vertices of 8 (v: 8), the number of UVs of 8 (vt: 8), and the number of faces of 4 (f: 4), as shown in a square 111. It is assumed that the patch B has the number of vertices of 4 (v: 4), the number of UVs of 4 (vt: 4), and the number of faces of 2 (f: 2) as indicated in a square 112. Note that, in the square 113, the connection information (vN), the UV coordinates (vtN), and the connection information (fN) (for each face) of the patch A are shown.

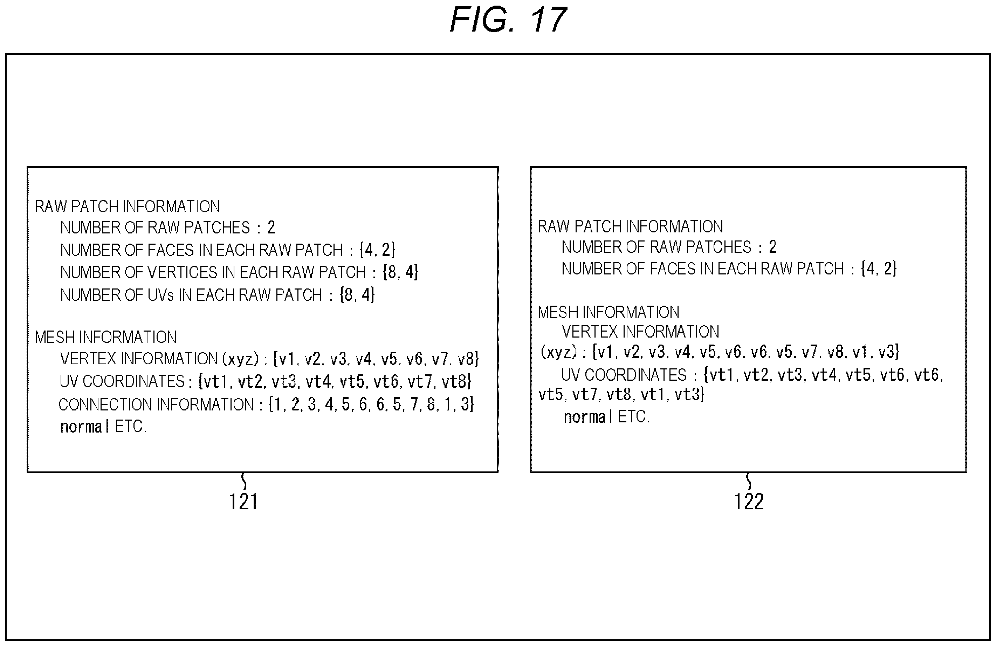

For such a patch, when the overlapped information is omitted in the mesh information and each element is indicated by the minimum number, the raw patch information and the mesh information are indicated, for example, as in a square 121 in Fig. 17. Note that, in Fig. 17, the mesh information is illustrated only for the patch A.

That is, in this case, the raw patch information indicates that the number of raw patches is 2, the number of faces in each raw patch is 4 and 2, the number of vertices in each raw patch is 8 and 4, and the number of UVs in each raw patch is 8 and 4. Furthermore, in the mesh information of the patch A, three-dimensional coordinates (xyz) of each vertex are indicated as vertex information (v1 to v8). Furthermore, in the mesh information of the patch A, coordinates (uv) in the texture map of each vertex are indicated as UV coordinates (vt1 to vt8). Moreover, in the mesh information of the patch A, an edge (connection) of each face is indicated as the connection information. Moreover, the mesh information of the patch A may also include attribute information such as a normal vector (normal).

### <Method 1-2-2>

Furthermore, as illustrated in the sixth row from the top of the table in Fig. 14, the mesh information of the raw patch may have a format in which vertex coordinates and the like of each face are indicated for each connection (hereinafter also referred to as a second format) (Method 1-2-2). That is, for the patch A and the patch B in Fig. 16, the raw patch information and the mesh information may be indicated as in a square 122 in Fig. 17, for example.

In this case, the raw patch information indicates that the number of raw patches is 2, and the number of faces in each raw patch is 4 and 2. The number of vertices and UV in each raw patch can be omitted. Furthermore, in the mesh information of the patch A, three-dimensional coordinates (xyz) of each vertex are indicated for each connection as vertex information. Furthermore, in the mesh information of the patch A, coordinates (uv) in the texture map of each vertex are indicated as UV coordinates for each connection (vt1 to vt8). In this case, the arrangement order of the vertices in the vertex information (and the arrangement order of the vertices in the UV coordinates) indicates connection. That is, this arrangement order corresponds to the connection information. Therefore, explicit indication of the connection information as in the square 121 can be omitted.

### <Method 1-2-3>

The coded data of the raw patch may be stored anywhere in the bit stream. For example, as illustrated in the seventh row from the top of the table in Fig. 14, all the raw patches may be stored in the header and coded (Method 1-2-3). For example, in the above-described first information processing device, the second coding unit may store the vertex information in the header and code the vertex information. Furthermore, in the above-described second information processing device, the second decoding unit may decode the coded data of the vertex information stored in the header to generate the vertex information.

### <Method 1-2-4>

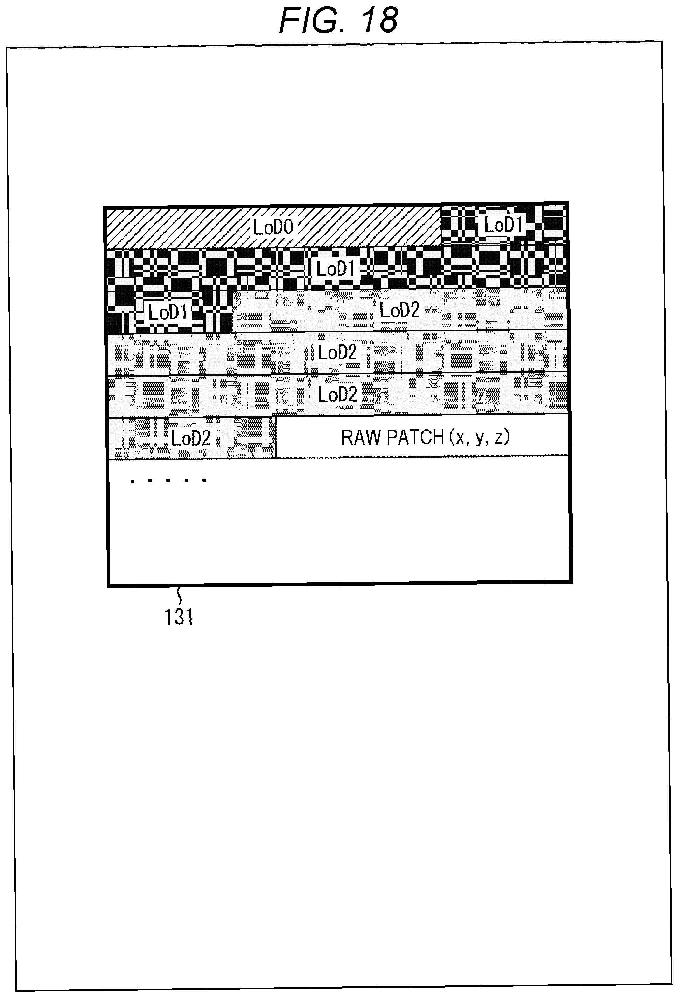

Furthermore, for example, as illustrated at the bottom of the table in Fig. 14, the vertex information may be stored in the displacement video, and the others may be stored in the header and coded (Method 1-2-4). For example, as illustrated in Fig. 18, the vertex information may be packed in a two-dimensional image 131 (frame image of displacement video) together with the displacement vector. In this case, three-dimensional coordinates (x, y, z) of each vertex are stored as vertex information. That is, coordinate values of one component (x-component, y-component, or z-component) of one vertex are stored as one pixel value. That is, absolute information indicating coordinates is stored in the frame image of the displacement video together with relative information such as a displacement vector.

Note that, when the displacement video includes three components that store the respective three components x, y, and z of the displacement vector, the respective components of the vertex information (three-dimensional coordinates) may be stored in different components. Furthermore, when the displacement video includes one component, all the components of the vertex information may be stored in one component. Also in this case, the coordinate value of one component of one vertex is stored as one pixel value. That is, the coordinate values (x-component, y-component, and z-component) of one vertex are stored using three pixels.

For example, in the above-described first information processing device, the second coding unit may store the vertex information in a displacement video having a 2D image, as a frame, in which a displacement vector is stored, and code the vertex information. Note that the displacement vector is a difference in position between a vertex of the subdivided base mesh and a vertex of the original mesh. Furthermore, the first information processing device may further include a third coding unit that stores coding system control information indicating an applied (selected) coding system in a header and codes the coding system control information.

Furthermore, in the above-described second information processing device, the second decoding unit may decode the coded data of the displacement video having the 2D image, as a frame, in which the displacement vector is stored, and generate the vertex information stored in the displacement video. Note that the displacement vector is a difference in position between a vertex of the subdivided base mesh and a vertex of the original mesh. Furthermore, the second information processing device may further include a third decoding unit that decodes the coded data of the coding system control information stored in the header.

### <Comparison of Bit Amounts>

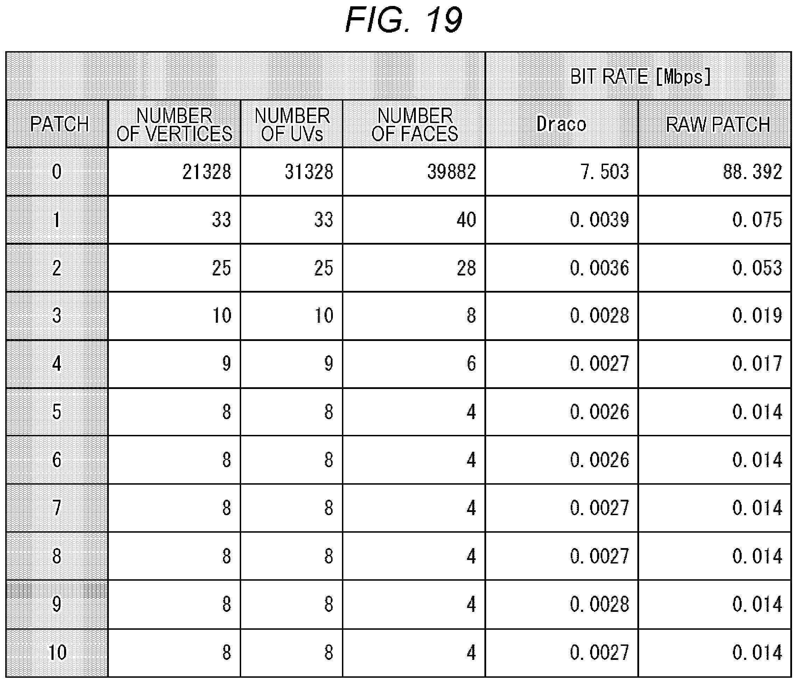

The table illustrated in Fig. 19 illustrates a comparison result of the bit rate (Mbps) of the coded data between a case where eleven patches are coded using the first system and a case where the patches are coded using the second system.

As shown in this table, in a patch having a relatively small number of faces (for example, patches 3 to 10), the bit rate of the second system (raw patch) is lower than that of the first system (Draco). Therefore, by applying the second system as in Method 1, a reduction in coding efficiency can be suppressed. In particular, when sub-meshing is performed in which there is a high possibility that the number of faces becomes small, a decrease in coding efficiency can be suppressed by applying the second system as in Method 1.

Conversely, in a patch having a large number of faces (for example, patches 0 to 2), the bit rate of the first system (Draco) is lower than that of the second system (raw patch). That is, the bit rate of the second system is not always lower than that of the first system. Therefore, by making the coding system selectable as in Method 1-1, it is possible to suppress a reduction in coding efficiency in more various cases.

Any method may be used to select (determine) the coding system. For example, selection (determination) may be performed on the basis of the number of faces, or selection (determination) may be performed by comparing coding costs. Note that, when this coding system is selected from among options prepared in advance, the number of candidates may be any number. Furthermore, any coding system may be included in the options. Furthermore, the coding system may be selected (determined) in any units of data. For example, the coding system may be selected (determined) for each frame, the coding system may be selected (determined) for each base mesh, or the coding system may be selected (determined) for each sub-mesh (patch).

### <Combination>

The above-described various methods (Method 1, Method 1-1, Method 1-1-1, Method 1-2, Method 1-2-1, Method 1-2-2, Method 1-2-3, Method 1-2-4, and other methods described above) may be appropriately combined and applied.

### <4. Embodiment>

### <Coding Device>

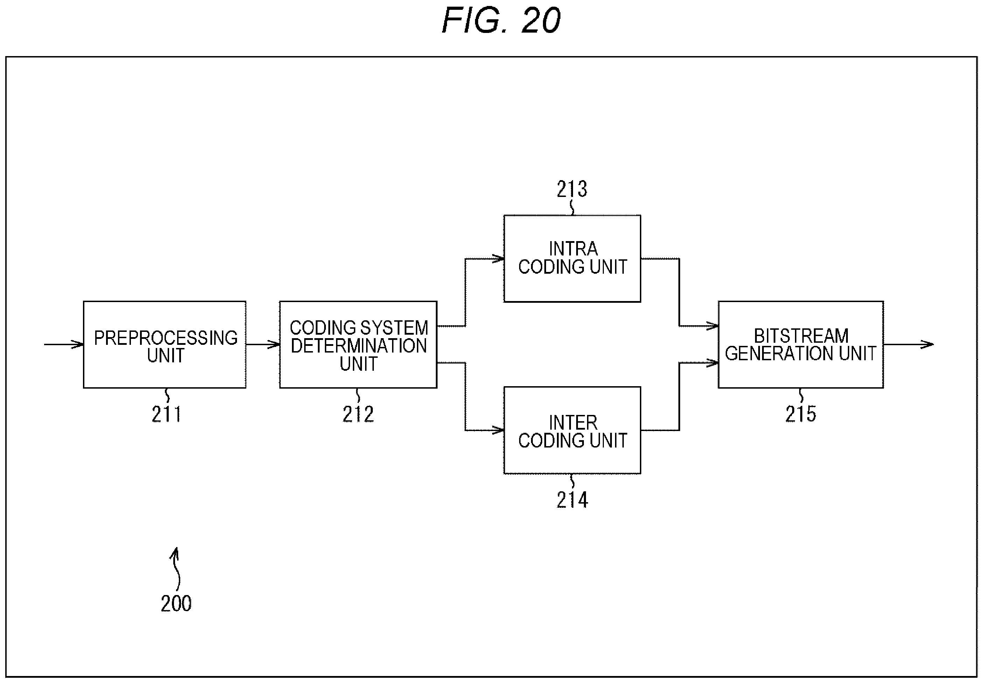

The present technology can be applied to a coding device that codes a mesh. Fig. 20 is a block diagram illustrating an example of a configuration of a coding device, which is one mode of an information processing device to which the present technology is applied. A coding device 200 illustrated in Fig. 20 is a device that codes a mesh. The coding device 200 codes a mesh by a method basically similar to the V-DMC described in Non-Patent Document 1.

In this case, the coding device 200 codes the mesh by applying Method 1, Method 1-1, Method 1-1-1, and Method 1-2 described above in <3. Coding without Conversion into Secondary Information>. Furthermore, the coding device 200 may apply one or more of Method 1-2-1 to Method 1-2-4. Therefore, the coding device 200 can also be referred to as a first information processing device.

Note that, in Fig. 20, main processing units, data flows, and the like are illustrated, and those illustrated in Fig. 20 are not necessarily all. That is, in the coding device 200, there may be a processing unit not illustrated as a block in Fig. 20, or there may be processing or a data flow not illustrated as an arrow or the like in Fig. 20.

As illustrated in Fig. 20, the coding device 200 includes a preprocessing unit 211, a coding system determination unit 212, an intra coding unit 213, an inter coding unit 214, and a bitstream generation unit 215.

The preprocessing unit 211 acquires a mesh and generates a base mesh and a displacement vector for each patch corresponding to the mesh. The preprocessing unit 211 supplies the generated base mesh for each patch to the coding system determination unit 212.

The coding system determination unit 212 determines the coding system of the base mesh of each patch. For example, the coding system determination unit 212 determines whether to apply intra coding or inter coding, selects whether to apply the first system or the second system when it is determined to apply intra coding, and generates coding system control information indicating the selected coding system (the first system or the second system). The coding system determination unit 212 supplies the base mesh (of the patch) to be intra-coded and the displacement vector corresponding to the base mesh to the intra coding unit 213 together with the coding system control information. Furthermore, the coding system determination unit 212 supplies the base mesh (of the patch) to be inter-coded and the displacement vector corresponding to the base mesh to the inter coding unit 214.

Note that the coding system determination unit 212 controls (each processing unit of) the intra coding unit 213 to code the base mesh by the determined coding system. For example, when the first system is selected, the coding system determination unit 212 controls the intra coding unit 213 to code the base mesh by the first system. Furthermore, when the second system is selected, the coding system determination unit 212 controls the intra coding unit 213 to code the base mesh by the second system.

The intra coding unit 213 codes the supplied base mesh by a method designated by the coding system control information. Furthermore, the intra coding unit 213 stores the supplied displacement vector in the displacement video and codes the displacement vector. The intra coding unit 213 supplies the generated coded data to the bitstream generation unit 215.

The inter coding unit 214 performs inter coding on the supplied base mesh. Furthermore, the inter coding unit 214 stores the supplied displacement vector in the displacement video and codes the displacement vector. The inter coding unit 214 supplies the generated coded data to the bitstream generation unit 215.

The bitstream generation unit 215 collects the coded data of each patch supplied from the intra coding unit 213 and the inter coding unit 214, and generates one bitstream. The bitstream generation unit 215 outputs the generated bitstream to outside of the coding device 200. This bit stream is supplied to the decoder via, for example, any transmission medium or storage medium, or both.

### <Intra Coding Unit>

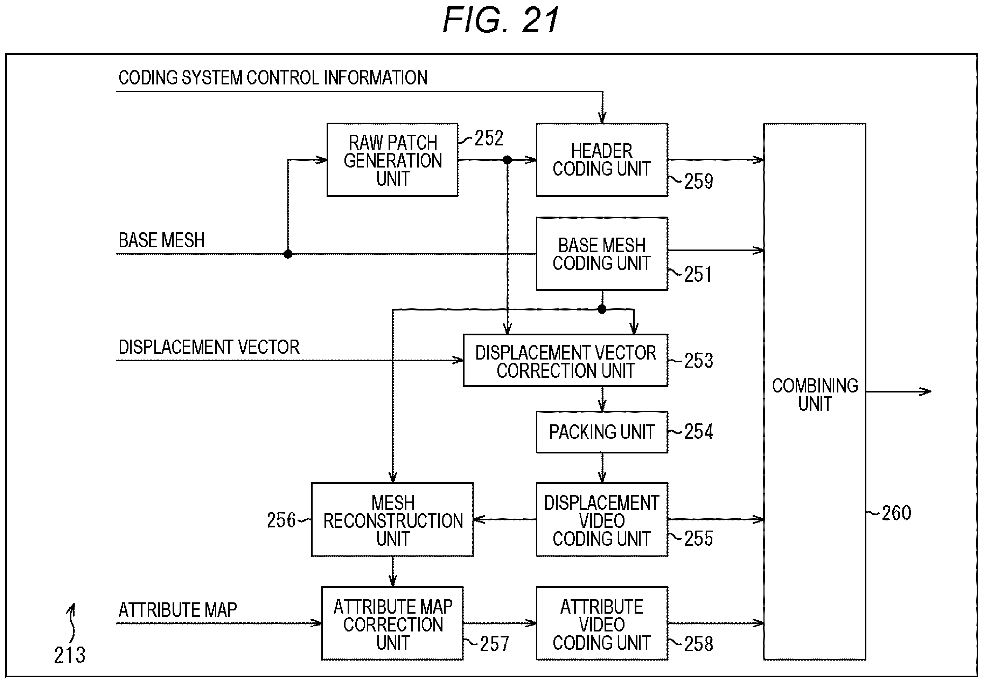

Fig. 21 is a block diagram illustrating a main configuration example of the intra coding unit 213 in Fig. 20. In Fig. 21, main processing units, data flows, and the like are illustrated, and those illustrated in Fig. 21 are not necessarily all. That is, in the intra coding unit 213, a processing section not depicted as a block in Fig. 21 may exist, or a process or data flow not depicted as an arrow or the like in Fig. 21 may exist.

As illustrated in Fig. 21, the intra coding unit 213 includes a base mesh coding unit 251, a raw patch generation unit 252, a displacement vector correction unit 253, a packing unit 254, a displacement video coding unit 255, a mesh reconstruction unit 256, an attribute map correction unit 257, an attribute video coding unit 258, a header coding unit 259, and a combining unit 260. Each processing unit operates under the control of the coding system determination unit 212.

The base mesh coding unit 251 acquires the base mesh and performs intra coding by the first system. That is, the base mesh coding unit 251 converts the base mesh into "secondary information indicating the relationship between the adjacent faces" and codes the converted information to generate coded data of the base mesh. When the first system is selected by the coding system determination unit 212, the base mesh coding unit 251 supplies the generated coded data of the base mesh to the combining unit 260. That is, the base mesh coding unit 251 can also be referred to as a first coding unit.

Furthermore, the base mesh coding unit 251 may decode the coded data to generate (restore) a base mesh. The generated (restored) base mesh includes coding distortion. The base mesh coding unit 251 supplies the base mesh to the displacement vector correction unit 253 and the mesh reconstruction unit 256.

When the second system is selected by the coding system determination unit 212, the raw patch generation unit 252 acquires a base mesh and generates a raw patch (mesh information and raw patch information) corresponding to the base mesh. At that time, as described with reference to Fig. 17, the raw patch generation unit 252 may generate the raw patch of the first format or the raw patch of the second format.

Note that the vertex information may be stored in the header or may be stored in the displacement video. When the vertex information is stored in the header, the raw patch generation unit 252 supplies all the data of the generated raw patch to the header coding unit 259. Furthermore, when the vertex information is stored in the displacement video, the raw patch generation unit 252 supplies the vertex information to the displacement vector correction unit 253, and supplies the other data to the header coding unit 259.

The displacement vector correction unit 253 acquires the base mesh including the coding distortion supplied from the base mesh coding unit 251. Furthermore, when the second system is selected by the coding system determination unit 212, the displacement vector correction unit 253 acquires the vertex information supplied from the raw patch generation unit 252. Furthermore, the displacement vector correction unit 253 acquires the displacement vector supplied from coding system determination unit 212.

The displacement vector correction unit 253 subdivides the acquired base mesh and corrects the displacement vector using the subdivided base mesh. Note that this correction may be omitted. Furthermore, when the vertex information is supplied from the raw patch generation unit 252, the displacement vector correction unit 253 may correct the vertex information using the subdivided base mesh. The displacement vector correction unit 253 supplies the displacement vector and the vertex information to the packing unit 254.

The packing unit 254 acquires the displacement vector supplied from the displacement vector correction unit 253 and packs the displacement vector into a two-dimensional image (also referred to as a frame image) of the current frame. At that time, the packing unit 254 may perform coefficient transform (for example, wavelet transform) on the displacement vector and pack the transform coefficients into a two-dimensional image. Furthermore, the packing unit 254 may quantize the displacement vector (or the transform coefficient) and pack the quantization coefficient into a two-dimensional image. The packing unit 254 supplies the two-dimensional image in which the displacement vector or information corresponding thereto is packed to the displacement video coding unit 255.

Furthermore, when the second system is selected by the coding system determination unit 212, the packing unit 254 may acquire the vertex information supplied from the displacement vector correction unit 253 and perform packing on a two-dimensional image (also referred to as a frame image) of the current frame. In that case, the packing unit 254 supplies a two-dimensional image in which the displacement vector or information corresponding thereto and the vertex information or information corresponding thereto are packed to the displacement video coding unit 255.

The displacement video coding unit 255 acquires the two-dimensional image supplied from the packing unit 254. The displacement video coding unit 255 uses the two-dimensional image as a frame image and codes (intra-codes) the image as a moving image (displacement video) using a 2D codec. That is, when the vertex information is included as the pixel value in the frame image of the displacement video, the displacement video coding unit 255 codes the vertex information without converting the vertex information into "secondary information indicating the relationship between the adjacent faces of the base mesh". Therefore, it can also be said that the displacement video coding unit 255 codes the vertex information by the second system. Therefore, the displacement video coding unit 255 can also be referred to as a second coding unit. The displacement video coding unit 255 supplies the coded data of the generated displacement video to the mesh reconstruction unit 256 and the combining unit 260.

The mesh reconstruction unit 256 decodes the coded data of the displacement video supplied from the displacement video coding unit 255, and derives a displacement vector by performing unpacking or the like from the two-dimensional image. Furthermore, the mesh reconstruction unit 256 subdivides the base mesh (including the coding distortion) supplied from the base mesh coding unit 251, and reconstructs the mesh by applying the derived displacement vector. This mesh includes coding distortion. The mesh reconstruction unit 256 supplies the reconstructed mesh to the attribute map correction unit 257.

The attribute map correction unit 257 acquires an attribute map such as texture and corrects the attribute map using the mesh (including the coding distortion) supplied from the mesh reconstruction unit 256. The attribute map correction unit 257 supplies the corrected attribute map to the attribute video coding unit 258. Note that this correction may be omitted.

The attribute video coding unit 258 uses the attribute map supplied from the attribute map correction unit 257 as a frame image and codes the image as a moving image (attribute video). The attribute video coding unit 258 supplies the coded data of the generated attribute video to the combining unit 260.

The header coding unit 259 codes the header. For example, when the second system is selected by the coding system determination unit 212, the header coding unit 259 acquires the raw patch supplied from the raw patch generation unit 252, stores the raw patch in the header, and codes the raw patch by the second system. For example, the header coding unit 259 may code a raw patch using a correlation between vertices of the base mesh. For example, the header coding unit 259 may perform differential coding on the raw patch. Furthermore, the header coding unit 259 may perform arithmetic coding on the raw patch. Furthermore, the header coding unit 259 may perform fixed bit coding on the raw patch. That is, the header coding unit 259 codes the base mesh without converting the base mesh into "secondary information indicating the relationship between the adjacent faces". Therefore, the header coding unit 259 can also be referred to as a second coding unit. Note that the raw patch may or may not include vertex information.

Furthermore, the header coding unit 259 acquires the coding system control information supplied from the coding system determination unit 212, stores the information in the header, and codes the information. Therefore, for example, when the vertex information is stored in the displacement video, the header coding unit 259 can also be referred to as a third coding unit. The header coding unit 259 supplies the generated coded data of the header to the combining unit 260.

The combining unit 260 combines (multiplexes) the supplied coded data of the header, the coded data of the base mesh, the coded data of the displacement video, and the coded data of the attribute video. The combining unit 260 supplies the combined coded data to the bitstream generation unit 215.

With such a configuration, the coding device 200 can code the base mesh as described above in <3. Coding without Conversion into Secondary Information>, so that a reduction in coding efficiency can be suppressed.

### <Flow of Coding Processing>

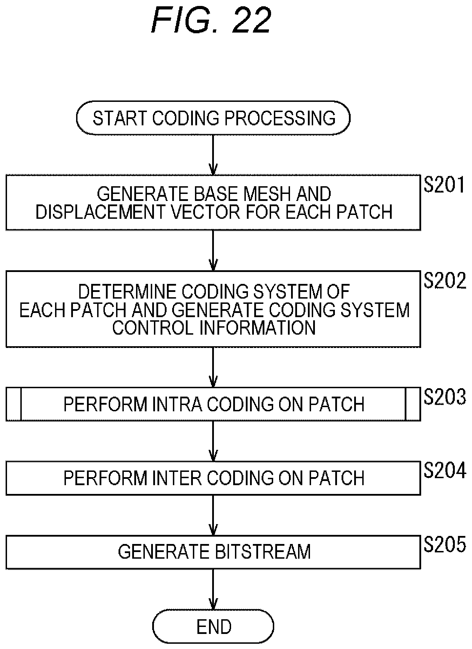

An example of a flow of a coding process executed by the coding device 200 will be described with reference to a flowchart of Fig. 22.

When the coding processing is started, the preprocessing unit 211 generates a base mesh and a displacement vector for each patch in step S201.

In step S202, the coding system determination unit 212 determines the coding system of the base mesh of each patch generated in step S201. For example, the coding system determination unit 212 selects the first system or the second system as the coding system of the base mesh of each patch generated in step S201. Then, the coding system determination unit 212 generates coding system control information indicating the selected coding system.

In step S203, the intra coding unit 213 performs intra coding processing on the patch to be subjected to intra coding, and codes the base mesh and the displacement vector.

In step S204, the inter coding unit 214 performs inter coding processing on the patch to be inter-coded, and codes the base mesh and the displacement vector.

In step S205, the bitstream generation unit 215 combines (multiplexes) the coded data obtained by the processing of step S203 and the coded data obtained by the processing of step S204 to generate a bitstream.

When the processing of step S205 ends, the coding processing ends.

### <Flow of Intra Coding Processing>

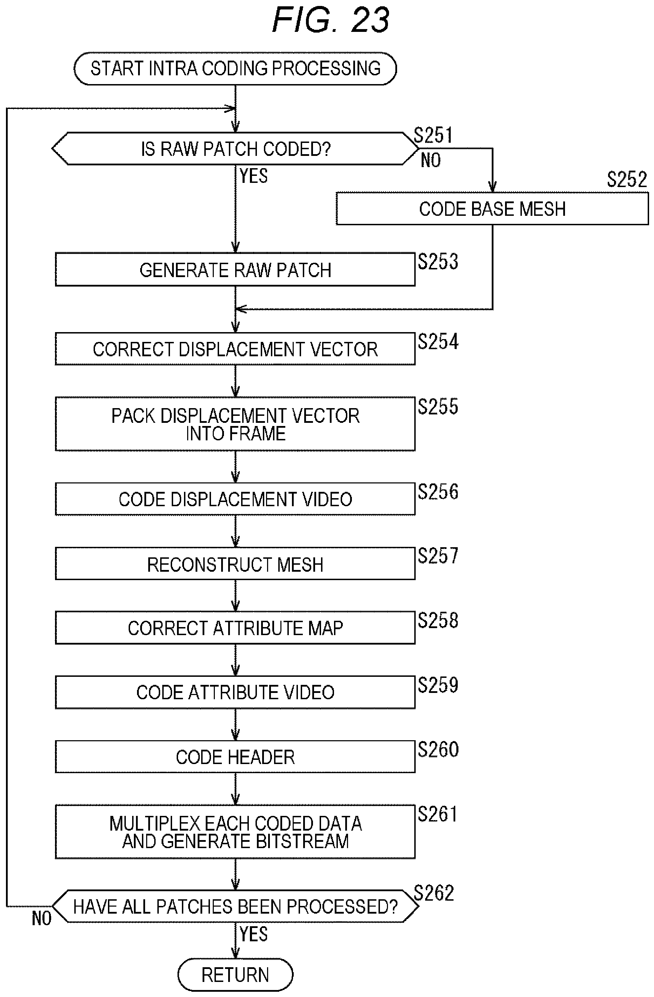

Next, an example of a flow of the intra coding processing executed in step S203 in Fig. 22 will be described with reference to a flowchart in Fig. 23.

When the intra coding processing is started, the base mesh coding unit 251 determines whether or not to code a raw patch in step S251. When it is determined not to code the raw patch, the process proceeds to step S252.

In step S252, the base mesh coding unit 251 codes the base mesh by the first system. That is, the base mesh coding unit 251 converts the base mesh into "secondary information indicating the relationship between the adjacent faces of the base mesh" to code the converted information.

When the processing of step S252 ends, the process proceeds to step S254. Furthermore, when it is determined in step S251 that the raw patch is to be coded, the process proceeds to step S253.

In step S253, the raw patch generation unit 252 converts the base mesh and generates a raw patch as the information for transmission. When the processing of step S253 ends, the process proceeds to step S254.

In step S254, the displacement vector correction unit 253 appropriately corrects the displacement vector using the base mesh including the coding distortion.

In step S255, the packing unit 254 packs the appropriately corrected displacement vector into the frame image of the displacement video.

In step S256, the displacement video coding unit 255 codes the displacement video.

In step S257, the mesh reconstruction unit 256 reconstructs the mesh using the base mesh including the coding distortion and the displacement vector.

In step S258, the attribute map correction unit 257 appropriately corrects the attribute map using the reconstructed mesh.

In step S259, the attribute video coding unit 258 codes the appropriately corrected attribute map.

In step S260, the header coding unit 259 codes the header. Note that, when it is determined in step S251 that the raw patch is coded, the header coding unit 259 stores the raw patch generated in step S253 in the header and codes the raw patch. Furthermore, the header coding unit 259 stores the coding system control information generated by the processing of step S202 in the header and codes the same.

In step S261, the combining unit 260 multiplexes the coded data generated in each processing to generate a bit stream.

In step S262, the base mesh coding unit 251 determines whether or not all the patches have been processed. When it is determined that there is unprocessed patch, the process returns to step S251 and the subsequent processing is executed. Furthermore, when it is determined in step S262 that all the patches have been processed, the intra coding processing ends, and the process returns to Fig. 22.

By executing each processing in this manner, the coding device 200 can code the base mesh as described above in <3. Coding without Conversion into Secondary Information>, so that a reduction in coding efficiency can be suppressed.

### <Decoding Device>

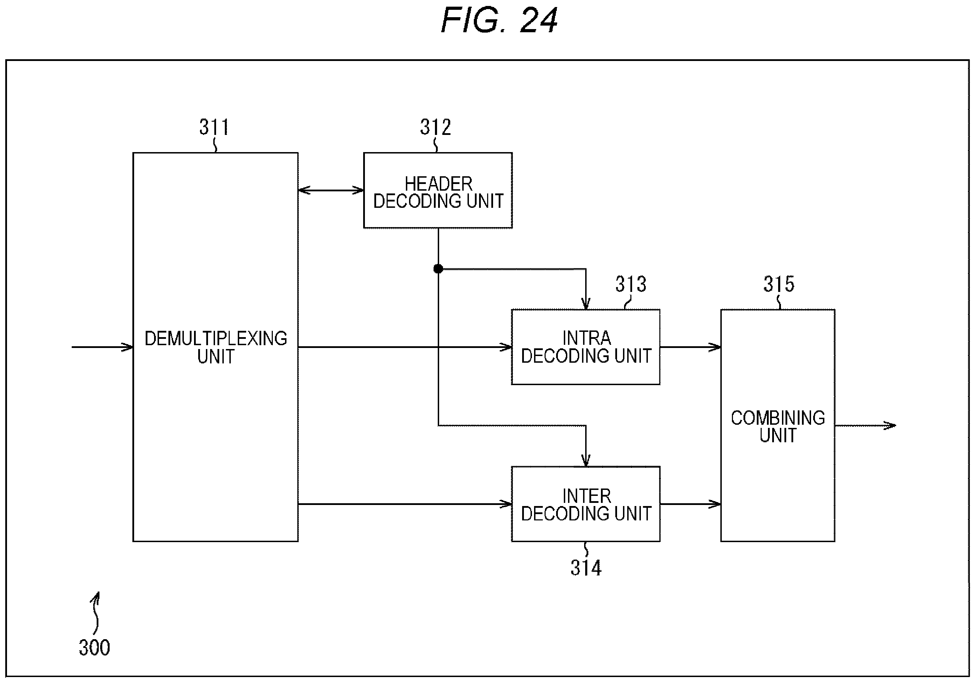

The present technology can be applied to a decoding device that decodes the coded data of a mesh. Fig. 24 is a block diagram illustrating an example of a configuration of a decoding device that is an aspect of an information processing device to which the present technology is applied. A decoding device 300 illustrated in Fig. 24 is a device that decodes the coded data of a mesh. The decoding device 300 decodes the coded data a mesh by a method basically similar to the V-DMC described in Non-Patent Document 1.

At that time, the decoding device 300 decodes the coded data of a mesh by applying Method 1, Method 1-1, Method 1-1-1, and Method 1-2 described above in <3. Coding without Conversion into Secondary Information>. Furthermore, the decoding device 300 may apply one or more of the Methods 1-2-1 to 1-2-4 described above. Therefore, the decoding device 300 can also be referred to as a second information processing device.

That is, the decoding device 300 is a decoding device corresponding to the coding device 200 in Fig. 20, and can decode the bitstream generated by the coding device 200 to reconstruct a mesh.

Note that while Fig. 24 illustrates main elements such as processing units and data flows, those illustrated in Fig. 24 do not necessarily include all elements. That is, in the decoding device 300, there may be a processing unit not illustrated as a block in Fig. 24, or there may be a process or a data flow not illustrated as an arrow or the like in Fig. 24.

As illustrated in Fig. 24, the decoding device 300 includes a demultiplexing unit 311, a header decoding unit 312, an intra decoding unit 313, an inter decoding unit 314, and a combining unit 315.

A bit stream generated by a coding device (for example, the coding device 200) that codes a mesh by the V-DMC method is supplied to the decoding device 300.

The demultiplexing unit 311 demultiplexes the bitstream and extracts each coded data included in the bitstream. For example, the demultiplexing unit 311 extracts the coded data of the header from the bit stream and supplies the coded data to the header decoding unit 312. Furthermore, the demultiplexing unit 311 supplies the coded data of the patch in which the base mesh is intra-coded to the intra decoding unit 313 and supplies the coded data of the patch in which the base mesh is inter-coded to the inter decoding unit 314 on the basis of the control of the header decoding unit 312.

The header decoding unit 312 decodes the coded data of the header supplied from the demultiplexing unit 311, and supplies necessary information to the demultiplexing unit 311, the intra decoding unit 313, and the inter decoding unit 314 as appropriate. Furthermore, the header decoding unit 312 controls the operations of the demultiplexing unit 311, the intra decoding unit 313, and the inter decoding unit 314.

Furthermore, the header decoding unit 312 decodes the coded data of the coding system control information, and generates (restores) the coding system control information. Therefore, the header decoding unit 312 can also be referred to as a third decoding unit. The header decoding unit 312 supplies the coding system control information to the intra decoding unit 313.

Furthermore, when the coding system control information designates the second system, the header decoding unit 312 acquires the coded data of the raw patch stored in the header, decodes the coded data by the second system, and generates (restores) a raw patch. That is, the header decoding unit 312 generates the base mesh that has not been converted into the secondary information indicating the relationship between the adjacent faces of the base mesh. Therefore, the header decoding unit 312 can also be referred to as a second decoding unit. The coded data may be coded using a correlation between vertices of the base mesh. For example, the header decoding unit 312 may perform differential decoding on the coded data of the raw patch that has been differentially coded. Furthermore, the header decoding unit 312 may arithmetically decode the coded data of the arithmetically coded raw patch. Furthermore, the header decoding unit 312 may perform fixed bit decoding on the coded data of the raw patch that has been subjected to the fixed bit coding. The header decoding unit 312 supplies the generated (restored) raw patch to the intra decoding unit 313.

On the basis of the control of the header decoding unit 312, the intra decoding unit 313 acquires the coded data of the intra-coded patch from the demultiplexing unit 311 and performs intra decoding. At that time, the intra decoding unit 313 applies the coding system designated by the coding system control information supplied from the header decoding unit 312, and decodes the coded data. The intra decoding unit 313 supplies the mesh and the attribute map of the patch generated (restored) by the decoding to the combining unit 315.

On the basis of the control of the header decoding unit 312, the inter decoding unit 314 acquires the coded data of the inter-coded patch from the demultiplexing unit 311, performs inter decoding, generates (restores) a mesh and an attribute map of the patch, and supplies the mesh and the attribute map to the combining unit 315.

The combining unit 315 combines the meshes and the attribute maps of the respective patches supplied from the intra decoding unit 313 and the inter decoding unit 314 to generate and output a mesh and an attribute map of the entire object.

### <Intra Decoding Unit>

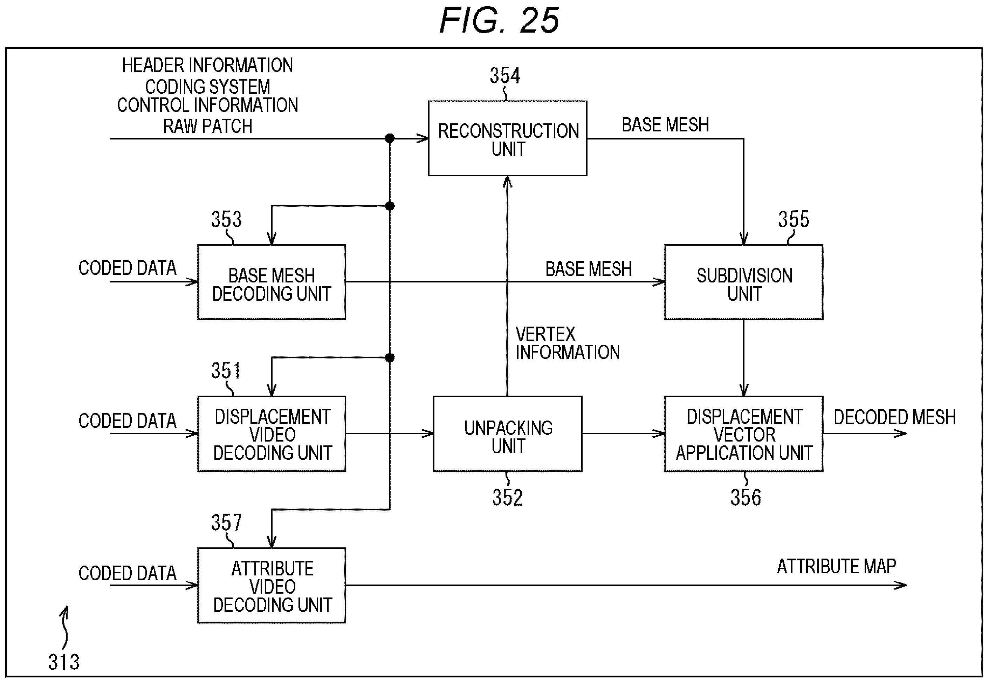

Fig. 25 is a block diagram illustrating a main configuration example of the intra decoding unit 313 in Fig. 24. In Fig. 25, main processing units, data flows, and the like are illustrated, and those illustrated in Fig. 25 are not necessarily all. That is, in the intra decoding unit 313, a processing section not depicted as a block in Fig. 25 may exist, or a process or data flow not depicted as an arrow or the like in Fig. 25 may exist.

As illustrated in Fig. 25, the intra decoding unit 313 includes a displacement video decoding unit 351, an unpacking unit 352, a base mesh decoding unit 353, a reconstruction unit 354, a subdivision unit 355, a displacement vector application unit 356, and an attribute video decoding unit 357. Each processing unit operates under the control of the header decoding unit 312.

The displacement video decoding unit 351 decodes the coded data of the displacement video supplied from the demultiplexing unit 311, and generates (restores) the displacement video. Note that a raw patch (vertex information) may be stored in the displacement video. In this case, it can also be said that the displacement video decoding unit 351 decodes the coded data of the displacement video and generates vertex information to be stored in the displacement video. Therefore, the displacement video decoding unit 351 can also be referred to as a second decoding unit. The displacement video decoding unit 351 supplies (the current frame of) the generated displacement video to the unpacking unit 352.

The unpacking unit 352 unpacks (extracts) the displacement vector from the current frame of the displacement video supplied from the displacement video decoding unit 351. At that time, the unpacking unit 352 may perform unpacking on the transform coefficient and perform coefficient transform (for example, wavelet transform) on the transform coefficient to derive a displacement vector. Furthermore, the unpacking unit 352 may unpack the quantization coefficient and inversely quantize the quantization coefficient to derive a displacement vector. Furthermore, the unpacking unit 352 may unpack the quantization coefficient, inversely quantize the quantization coefficient to derive a transform coefficient, and perform coefficient transform (for example, wavelet transform) on the transform coefficient to derive a displacement vector. The unpacking unit 352 supplies the unpacked displacement vector to the displacement vector application unit 356.

Note that, when a raw patch (vertex information) is stored in the displacement video, the unpacking unit 352 also unpacks the vertex information and supplies the vertex information to the reconstruction unit 354.

The base mesh decoding unit 353 acquires the coding system control information supplied from the header decoding unit 312. When the first system is designated by the coding system control information, the base mesh decoding unit 353 decodes the coded data of the base mesh supplied from the demultiplexing unit 311 by the first system, and generates (restores) the base mesh. That is, the base mesh decoding unit 353 decodes the coded data of the base mesh, generates secondary information indicating the relationship between the adjacent faces of the base mesh, and converts the generated secondary information into vertex information and connection information of the base mesh. Therefore, the base mesh decoding unit 353 can also be referred to as a first decoding unit. The base mesh decoding unit 353 supplies the generated base mesh to the subdivision unit 355.

The reconstruction unit 354 acquires the coding system control information supplied from the header decoding unit 312. When the second system is designated by the coding system control information, the reconstruction unit 354 acquires the raw patch (raw patch included in the header) supplied from the header decoding unit 312. Note that, as described above, the vertex information constituting the raw patch may be stored in the header or may be stored in the displacement video. When the vertex information is stored in the displacement video, the reconstruction unit 354 further acquires the vertex information supplied from the unpacking unit 352. The reconstruction unit 354 reconstructs the base mesh using the raw patch acquired in this manner. That is, the reconstruction unit 354 converts the raw patch that is the information for transmission into the base mesh. Note that the data format of the raw patch may be the first format, the second format, or other formats. The reconstruction unit 354 supplies the reconstructed base mesh to the subdivision unit 355.

The subdivision unit 355 subdivides the base mesh supplied from the base mesh decoding unit 353, and supplies the subdivided base mesh to the displacement vector application unit 356. Furthermore, the subdivision unit 355 subdivides the base mesh supplied from the reconstruction unit 354, and supplies the subdivided base mesh to the displacement vector application unit 356.

The displacement vector application unit 356 applies the displacement vector supplied from the unpacking unit 352 to the vertices of the subdivided base mesh supplied from the subdivision unit 355 to reconstruct the mesh. In the present specification, this reconstructed mesh is also referred to as a decoded mesh. That is, it can also be said that the displacement vector application unit 356 generates a decoded mesh. The displacement vector application unit 356 supplies the generated decoded mesh to the combining unit 315.

The attribute video decoding unit 357 decodes the coded data of the attribute video supplied from the demultiplexing unit 311, and generates (the current frame of) the attribute video. The attribute video decoding unit 357 supplies the current frame of the generated attribute video, that is, the attribute map corresponding to the decoded mesh to the combining unit 315.

With such a configuration, the decoding device 300 can decode the coded data of the base mesh as described above in <3. Coding without Conversion into Secondary Information>, so that a reduction in coding efficiency can be suppressed.

### <Flow of Decoding Processing>

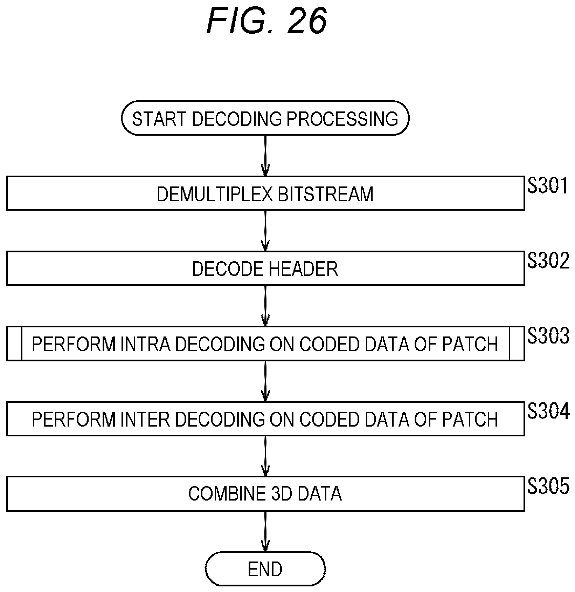

An example of a flow of the decoding processing executed by the decoding device 300 will be described with reference to the flowchart in Fig. 26.

When the decoding processing is started, in step S301, the demultiplexing unit 311 demultiplexes the bitstream and extracts various coded data.

In step S302, the header decoding unit 312 decodes the coded data of the header extracted in step S301, and generates (restores) information stored in the header. For example, the header decoding unit 312 decodes the coded data of the coding system control information, and generates (restores) the coding system control information. Furthermore, when the coding system control information designates the second system, the header decoding unit 312 acquires the coded data of the raw patch stored in the header, decodes the coded data by the second system, and generates (restores) a raw patch. That is, the header decoding unit 312 generates the base mesh that has not been converted into the secondary information indicating the relationship between the adjacent faces of the base mesh.

In step S303, the intra decoding unit 313 performs intra decoding processing and performs intra decoding on the coded data of the intra-coded patch.

In step S304, the inter decoding unit 314 performs inter decoding processing and performs inter decoding on the coded data of the inter-coded patch.

In step S305, the combining unit 315 combines the 3D data of each patch generated by the processing of steps S303 and S304.

When the processing of step S305 ends, the decoding processing ends.

### <Flow of Intra Decoding Processing>

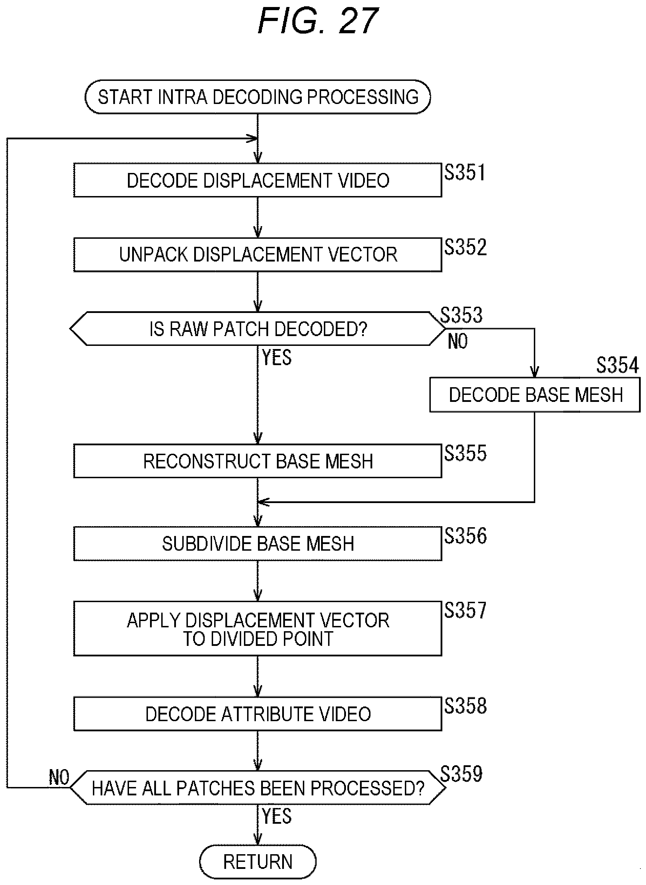

Next, an example of a flow of the intra decoding processing executed in step S303 in Fig. 26 will be described with reference to a flowchart in Fig. 27.

When the intra decoding processing is started, in step S351, the displacement video decoding unit 351 decodes the coded data of the displacement video and generates (restores) the displacement video. Note that a raw patch (vertex information) may be stored in the displacement video. In this case, it can also be said that the displacement video decoding unit 351 decodes the coded data of the displacement video and generates vertex information to be stored in the displacement video.

In step S352, the unpacking unit 352 unpacks (extracts) the displacement vector from the current frame of the displacement video. At that time, the unpacking unit 352 may perform unpacking on the transform coefficient and perform coefficient transform (for example, wavelet transform) on the transform coefficient to derive a displacement vector. Furthermore, the unpacking unit 352 may unpack the quantization coefficient and inversely quantize the quantization coefficient to derive a displacement vector. Furthermore, the unpacking unit 352 may unpack the quantization coefficient, inversely quantize the quantization coefficient to derive a transform coefficient, and perform coefficient transform (for example, wavelet transform) on the transform coefficient to derive a displacement vector. Note that, when a raw patch (vertex information) is stored in the displacement video, the unpacking unit 352 also unpacks the vertex information.

In step S353, the base mesh decoding unit 353 determines whether or not to decode a raw patch. When the first system is designated by the coding system control information, it is determined not to decode the raw patch, and the process proceeds to step S354.

In step S354, the base mesh decoding unit 353 decodes the coded data of the base mesh extracted from the bit stream by the demultiplexing in step S301 by the first system and generates (restores) the base mesh. That is, the base mesh decoding unit 353 decodes the coded data of the base mesh, generates secondary information indicating the relationship between the adjacent faces of the base mesh, and converts the generated secondary information into vertex information and connection information of the base mesh.

When the processing of step S354 ends, the process proceeds to step S356. Furthermore, in step S353, when the second system is designated by the coding system control information, it is determined that the raw patch is decoded, and the process proceeds to step S355.

In step S355, the reconstruction unit 354 acquires the raw patch (the raw patch stored and transmitted in the header) generated (restored) by the processing of step S302. Note that, the vertex information constituting the raw patch may be stored in the header or may be stored in the displacement video. When the vertex information is stored in the displacement video, the reconstruction unit 354 further acquires unpacked vertex information from the displacement video. The reconstruction unit 354 reconstructs the base mesh using the raw patch acquired in this manner. That is, the reconstruction unit 354 converts the raw patch that is the information for transmission into the base mesh. Note that the data format of the raw patch may be the first format, the second format, or other formats. When the processing of step S355 ends, the process proceeds to step S356.

In step S356, the subdivision unit 355 subdivides the base mesh obtained in step S354 or step S355.

In step S357, the displacement vector application unit 356 applies the displacement vector unpacked from the displacement video to the vertices of the subdivided base mesh, and reconstructs the mesh (generates a decoded mesh).

In step S358, the attribute video decoding unit 357 decodes the coded data of the attribute video extracted from the bit stream by the demultiplexing in step S301, and generates (the current frame of) the attribute video.

In step S359, the base mesh decoding unit 353 determines whether or not all the patches have been processed. When it is determined that there is unprocessed patch, the process returns to step S351 and the subsequent processing is executed. Furthermore, when it is determined in step S359 that all the patches have been processed, the intra decoding processing ends, and the process returns to Fig. 26.

By executing each processing in this manner, the decoding device 300 can decode the coded data of the base mesh as described above in <3. Coding without Conversion into Secondary Information>, so that a reduction in coding efficiency can be suppressed.

### <5. Supplementary Note>

### <Computer>

The above-described series of processing can be executed by hardware or software. When a series of processing is executed by software, a program included in the software is installed on a computer. Here, examples of the computer include, for example, a computer that is built in dedicated hardware, a general-purpose personal computer that can perform various functions by being installed with various programs, and the like.

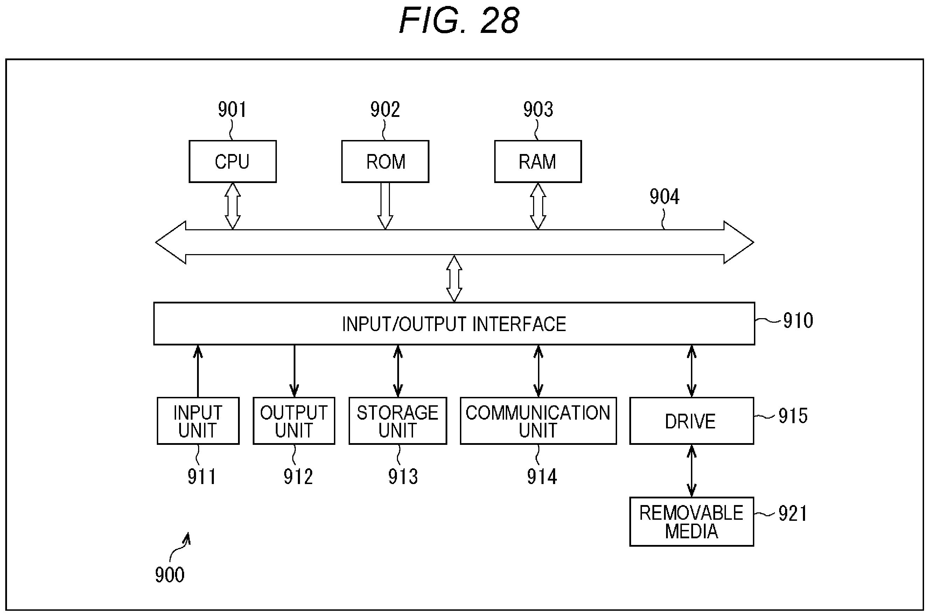

Fig. 28 is a block diagram illustrating a configuration example of hardware of a computer that executes the series of processes described above in accordance with a program.

In a computer 900 illustrated in Fig. 28, a central processing unit (CPU) 901, a read only memory (ROM) 902, and a random access memory (RAM) 903 are mutually connected via a bus 904.

The bus 904 is further connected with an input/output interface 910. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory and the like. The communication unit 914 includes, for example, a network interface. The drive 915 drives a removable medium 921 such as a magnetic disk, an optical disk, a magneto-optical disk, or a semiconductor memory.

In the computer configured as described above, the series of processes described above are performed, for example, by the CPU 901 loading a program recorded in the storage unit 913 into the RAM 903 via the input/output interface 910 and the bus 904, and executing. The RAM 903 also appropriately stores data necessary for the CPU 901 to execute various processes, for example.

The program executed by the computer can be applied by being recorded on, for example, the removable medium 921 as a package medium or the like. In this case, by attaching the removable medium 921 to the drive 915, the program can be installed in the storage unit 913 via the input/output interface 910.

Furthermore, this program can also be provided via a wired or wireless transmission medium such as a local area network, the Internet, or digital satellite broadcasting. In this case, the program can be received by the communication unit 914 and installed in the storage unit 913.

Besides, the program can be installed in advance in the ROM 902 and the storage unit 913.

### <Applicable target of Present Technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices through a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

### <Field and Application to which Present Technology is applicable>

The system, device, processing unit and the like to which the present technology is applied can be used in any field such as traffic, medical care, crime prevention, agriculture, livestock industry, mining, beauty care, factory, household appliance, weather, and natural surveillance, for example. Furthermore, application thereof is also arbitrary.

### <Others>

Note that, in the present specification, a "flag" is information for identifying a plurality of states, and includes not only information used for identifying two states of true (1) and false (0) but also information capable of identifying three or more states. Hence, a value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only identification information thereof in a bitstream but also difference information of the identification information with respect to certain reference information in the bitstream, and thus, in the present specification, the "flag" and "identification information" include not only the information thereof but also the difference information with respect to the reference information.

Furthermore, various kinds of information (such as metadata) related to coded data (a bitstream) may be transmitted or recorded in any form as long as it is associated with the coded data. Here, the term "associating" means, when processing one data, allowing other data to be used (to be linked), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be of not entire data but a part of data. For example, an image and information corresponding to the image may be associated with each other in any unit such as a plurality of frames, one frame, or a part within a frame.

Note that, in the present specification, terms such as "combine", "multiplex", "add", "merge", "include", "store", "put in", "introduce", and "insert" mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, when the configuration and operation as the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block and the like) and obtain necessary information.

Furthermore, for example, each step in one flowchart may be executed by one device, or may be executed by being shared by a plurality of devices. Moreover, when a plurality of pieces of processing is included in one step, the plurality of pieces of processing may be executed by one device, or may be shared and executed by a plurality of devices. In other words, a plurality of pieces of processing included in one step can be executed as a plurality of steps. Conversely, the processes described as the plurality of the steps can also be collectively executed as one step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the process of each step may be executed in an order different from the above-described order. Moreover, the processes in the steps describing the program may be executed in parallel with processes of another program, or may be executed in combination with processes of the other program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that the present technology can also have the following configurations.
(1) An information processing device including:
   a coding system determination unit that selects a first system or a second system as a coding system of a base mesh to be subjected to intra coding;
   a first coding unit that, when the first system is selected as the coding system, converts vertex information indicating positions of vertices constituting the base mesh and connection information indicating connection between the vertices constituting the base mesh into secondary information indicating a relationship between adjacent faces of the base mesh and codes the secondary information; and
   a second coding unit that, when the second system is selected as the coding system, codes the vertex information and the connection information without converting the vertex information and the connection information into the secondary information, in which
   the base mesh is a mesh that is generated by decimating vertices from an original mesh to be coded configured by vertices and connections representing a three-dimensional structure of an object, and is coarser than the original mesh.
(2) The information processing device according to (1), in which
   the second coding unit codes the vertex information using a correlation between vertices of the base mesh.
(3) The information processing device according to (2), in which
   the second coding unit performs differential coding on the vertex information.
(4) The information processing device according to (2), in which
   the second coding unit performs arithmetic coding on the vertex information.
(5) The information processing device according to (1), in which
   the second coding unit performs fixed bit coding on the vertex information.
(6) The information processing device according to any one of (1) to (5), in which
   the second coding unit stores the vertex information in a header to code the vertex information.
(7) The information processing device according to (6), in which
   the second coding unit further stores coding system control information indicating the selected coding system in the header and codes the coding system control information.
(8) The information processing device according to any one of (1) to (4), in which
   the second coding unit stores and codes the vertex information in a displacement video having a 2D image, as a frame, in which a displacement vector is stored, and
   the displacement vector is a difference in position between the vertex of the subdivided base mesh and the vertex of the original mesh.
(9) The information processing device according to (8), further including:
   a third coding unit that stores coding system control information indicating the selected coding system in a header and codes the coding system control information.
(10) The information processing device according to any one of (1) to (9), further including:
   a raw patch generation unit that converts the base mesh and generates a raw patch as information for transmission, in which
   when the second system is selected as the coding system, the second coding unit codes the raw patch without converting the raw patch into the secondary information.
(11) The information processing device according to (10), in which
   the raw patch includes mesh information including the vertex information and the connection information, and raw patch information including meta information related to the base mesh.
(12) The information processing device according to (11), in which
   overlapped information in the vertex information is omitted, and the vertex is indicated by a minimum number.
(13) The information processing device according to (11), in which
   the vertex information indicates the vertex for each of the connections.
(14) The information processing device according to any one of (11) to (13), in which
   the raw patch information includes information indicating a number of raw patches and information indicating a number of faces in the raw patch.
(15) An information processing method including:
   selecting a first system or a second system as a coding system of a base mesh to be subjected to intra coding;
   converting, when the first system is selected as the coding system, vertex information indicating positions of vertices constituting the base mesh and connection information indicating connection between the vertices constituting the base mesh into secondary information indicating a relationship between adjacent faces of the base mesh and coding the secondary information; and
   coding, when the second system is selected as the coding system, the vertex information and the connection information without converting the vertex information and the connection information into the secondary information, in which
   the base mesh is a mesh that is generated by decimating vertices from an original mesh to be coded configured by vertices and connections representing a three-dimensional structure of an object, and is coarser than the original mesh.
(21) An information processing device including:
   a first decoding unit that decodes coded data of an intra-coded base mesh, generates secondary information indicating a relationship between adjacent faces of the base mesh, and converts the generated secondary information into vertex information and connection information of the base mesh when coding system control information indicates a first system as a coding system of the intra-coded base mesh; and
   a second decoding unit that decodes coded data of the base mesh and generates the vertex information and the connection information that are not converted into the secondary information when the coding system control information indicates a second system as the coding system, in which
   the base mesh is a mesh that is generated by decimating vertices from an original mesh to be coded configured by vertices and connections representing a three-dimensional structure of an object, and is coarser than the original mesh,
   the vertex information is information indicating a position of a vertex constituting the base mesh,
   the connection information is information indicating connection between the vertices constituting the base mesh,
   the first system is a coding system of converting the vertex information and the connection information into the secondary information and coding the secondary information, and
   the second system is a coding system of coding the vertex information and the connection information without converting the vertex information and the connection information into the secondary information.
(22) The information processing device according to (21), in which
   the second decoding unit decodes coded data of the vertex information coded using a correlation between vertices of the base mesh.
(23) The information processing device according to (22), in which
   the second decoding unit decodes coded data of the vertex information that has been differentially coded.
(24) The information processing device according to (22), in which
   the second decoding unit decodes coded data of the vertex information that has been arithmetically coded.
(25) The information processing device according to (21), in which
   the second decoding unit decodes the vertex information that has been subjected to fixed bit coding.
(26) The information processing device according to any one of (21) to (25), in which
   the second decoding unit decodes coded data of the vertex information stored in a header and generates the vertex information.
(27) The information processing device according to (26), in which
   the second decoding unit further decodes coded data of the coding system control information stored in the header.
(28) The information processing device according to any one of (21) to (23), in which
   the second decoding unit decodes coded data of a displacement video having a 2D image, as a frame, in which a displacement vector is stored, and generates the vertex information to be stored in the displacement video, and
   the displacement vector is a difference in position between the vertex of the subdivided base mesh and the vertex of the original mesh.
(29) The information processing device according to (28), further including:
   a third decoding unit that decodes coded data of the coding system control information stored in a header.
(30) The information processing device according to any one of (21) to (29), in which
   the second decoding unit decodes coded data of the base mesh and generates a raw patch which is information of a transmission format of the base mesh, and
   the information processing device further includes a reconstruction unit that reconstructs the base mesh using the raw patch.
(31) The information processing device according to (30), in which
   the raw patch includes mesh information including the vertex information and the connection information, and raw patch information including meta information related to the base mesh.
(32) The information processing device according to (31), in which
   overlapped information in the vertex information is omitted, and the vertex is indicated by a minimum number.
(33) The information processing device according to (31), in which
   the vertex information indicates the vertex for each of the connections.
(34) The information processing device according to any one of (31) to (33), in which
   the raw patch information includes information indicating a number of raw patches and information indicating a number of faces in the raw patch.
(35) An information processing method including:
   decoding coded data of an intra-coded base mesh, generating secondary information indicating a relationship between adjacent faces of the base mesh, and converting the generated secondary information into vertex information and connection information of the base mesh when coding system control information indicates a first system as a coding system of the intra-coded base mesh; and
   decoding coded data of the base mesh and generating the vertex information and the connection information that are not converted into the secondary information when the coding system control information indicates a second system as the coding system, in which
   the base mesh is a mesh that is generated by decimating vertices from an original mesh to be coded configured by vertices and connections representing a three-dimensional structure of an object, and is coarser than the original mesh,
   the vertex information is information indicating a position of a vertex constituting the base mesh,
   the connection information is information indicating connection between the vertices constituting the base mesh,
   the first system is a coding system of converting the vertex information and the connection information into the secondary information and coding the secondary information, and
   the second system is a coding system of coding the vertex information and the connection information without converting the vertex information and the connection information into the secondary information.

### REFERENCE SIGNS LIST

- 200: Coding device
- 211: Preprocessing unit
- 212: Coding system determination unit
- 213: Intra coding unit
- 214: Inter coding unit
- 215: Bitstream generation unit
- 251: Base mesh coding unit
- 252: Raw patch generation unit
- 253: Displacement vector correction unit
- 254: Packing unit
- 255: Displacement video coding unit
- 256: Mesh reconstruction unit
- 257: Attribute map correction unit
- 258: Attribute video coding unit
- 259: Header coding unit
- 260: Combining unit
- 300: Decoding device
- 311: Demultiplexing unit
- 312: Header decoding unit
- 313: Intra decoding unit
- 314: Inter decoding unit
- 315: Combining unit
- 351: Displacement video decoding unit
- 352: Unpacking unit
- 353: Base mesh decoding unit
- 354: Reconstruction unit
- 355: Subdivision unit
- 356: Displacement vector application unit
- 357: Attribute video decoding unit
- 900: Computer

## Claims

1. An information processing device comprising:
a coding system determination unit that selects a first system or a second system as a coding system of a base mesh to be subjected to intra coding;
a first coding unit that, when the first system is selected as the coding system, converts vertex information indicating positions of vertices constituting the base mesh and connection information indicating connection between the vertices constituting the base mesh into secondary information indicating a relationship between adjacent faces of the base mesh and codes the secondary information; and
a second coding unit that, when the second system is selected as the coding system, codes the vertex information and the connection information without converting the vertex information and the connection information into the secondary information, wherein
the base mesh is a mesh that is generated by decimating vertices from an original mesh to be coded configured by vertices and connections representing a three-dimensional structure of an object, and is coarser than the original mesh.

2. The information processing device according to claim 1, wherein
the second coding unit codes the vertex information using a correlation between vertices of the base mesh.

3. The information processing device according to claim 1, wherein
the second coding unit stores the vertex information in a header to code the vertex information.

4. The information processing device according to claim 3, wherein
the second coding unit further stores coding system control information indicating the selected coding system in the header and codes the coding system control information.

5. The information processing device according to claim 1, wherein
the second coding unit stores and codes the vertex information in a displacement video having a 2D image, as a frame, in which a displacement vector is stored, and
the displacement vector is a difference in position between the vertex of the subdivided base mesh and the vertex of the original mesh.

6. The information processing device according to claim 5, further comprising:
a third coding unit that stores coding system control information indicating the selected coding system in a header and codes the coding system control information.

7. The information processing device according to claim 1, further comprising:
a raw patch generation unit that converts the base mesh and generates a raw patch as information for transmission, wherein
when the second system is selected as the coding system, the second coding unit codes the raw patch without converting the raw patch into the secondary information.

8. The information processing device according to claim 7, wherein
the raw patch includes mesh information including the vertex information and the connection information, and raw patch information including meta information related to the base mesh.

9. The information processing device according to claim 8, wherein
the raw patch information includes information indicating a number of raw patches and information indicating a number of faces in the raw patch.

10. An information processing method comprising:
selecting a first system or a second system as a coding system of a base mesh to be subjected to intra coding;
converting, when the first system is selected as the coding system, vertex information indicating positions of vertices constituting the base mesh and connection information indicating connection between the vertices constituting the base mesh into secondary information indicating a relationship between adjacent faces of the base mesh and coding the secondary information; and
coding, when the second system is selected as the coding system, the vertex information and the connection information without converting the vertex information and the connection information into the secondary information, wherein
the base mesh is a mesh that is generated by decimating vertices from an original mesh to be coded configured by vertices and connections representing a three-dimensional structure of an object, and is coarser than the original mesh.

11. An information processing device comprising:
a first decoding unit that decodes coded data of an intra-coded base mesh, generates secondary information indicating a relationship between adjacent faces of the base mesh, and converts the generated secondary information into vertex information and connection information of the base mesh when coding system control information indicates a first system as a coding system of the intra-coded base mesh; and
a second decoding unit that decodes coded data of the base mesh and generates the vertex information and the connection information that are not converted into the secondary information when the coding system control information indicates a second system as the coding system, wherein
the base mesh is a mesh that is generated by decimating vertices from an original mesh to be coded configured by vertices and connections representing a three-dimensional structure of an object, and is coarser than the original mesh,
the vertex information is information indicating a position of a vertex constituting the base mesh,
the connection information is information indicating connection between the vertices constituting the base mesh,
the first system is a coding system of converting the vertex information and the connection information into the secondary information and coding the secondary information, and
the second system is a coding system of coding the vertex information and the connection information without converting the vertex information and the connection information into the secondary information.

12. The information processing device according to claim 11, wherein
the second decoding unit decodes coded data of the vertex information coded using a correlation between vertices of the base mesh.

13. The information processing device according to claim 11, wherein
the second decoding unit decodes coded data of the vertex information stored in a header and generates the vertex information.

14. The information processing device according to claim 13, wherein
the second decoding unit further decodes coded data of the coding system control information stored in the header.

15. The information processing device according to claim 11, wherein
the second decoding unit decodes coded data of a displacement video having a 2D image, as a frame, in which a displacement vector is stored, and generates the vertex information to be stored in the displacement video, and
the displacement vector is a difference in position between the vertex of the subdivided base mesh and the vertex of the original mesh.

16. The information processing device according to claim 15, further comprising:
a third decoding unit that decodes coded data of the coding system control information stored in a header.

17. The information processing device according to claim 11, wherein
the second decoding unit decodes coded data of the base mesh and generates a raw patch which is information of a transmission format of the base mesh, and
the information processing device further comprises a reconstruction unit that reconstructs the base mesh using the raw patch.

18. The information processing device according to claim 17, wherein
the raw patch includes mesh information including the vertex information and the connection information, and raw patch information including meta information related to the base mesh.

19. The information processing device according to claim 18, wherein
the raw patch information includes information indicating a number of raw patches and information indicating a number of faces in the raw patch.

20. An information processing method comprising:
decoding coded data of an intra-coded base mesh, generating secondary information indicating a relationship between adjacent faces of the base mesh, and converting the generated secondary information into vertex information and connection information of the base mesh when coding system control information indicates a first system as a coding system of the intra-coded base mesh; and
decoding coded data of the base mesh and generating the vertex information and the connection information that are not converted into the secondary information when the coding system control information indicates a second system as the coding system, wherein
the base mesh is a mesh that is generated by decimating vertices from an original mesh to be coded configured by vertices and connections representing a three-dimensional structure of an object, and is coarser than the original mesh,
the vertex information is information indicating a position of a vertex constituting the base mesh,
the connection information is information indicating connection between the vertices constituting the base mesh,
the first system is a coding system of converting the vertex information and the connection information into the secondary information and coding the secondary information, and
the second system is a coding system of coding the vertex information and the connection information without converting the vertex information and the connection information into the secondary information.
